# EUROPEAN PATENT APPLICATION

(11) **EP 4 845 073 A1**
(43) Date of publication of application: **25.11.2026**
(21) Application number: 25747660.6
(22) Date of filing: 21.01.2025
(51) Int. Cl.: H04L 1/1812, H04W 52/02

(54) **COMMUNICATION METHOD AND DEVICE**

(30) Priority: 01.02.2024 CN 202410158327
(71) Applicant: Huawei Technologies Co., Ltd., Shenzhen, Guangdong 518129 (CN)
(72) Inventor: QIU, Jing, Shenzhen, Guangdong 518129 (CN); HE, Jia, Shenzhen, Guangdong 518129 (CN); MA, Jianglei, Shenzhen, Guangdong 518129 (CN)
(74) Representative: Huawei European IPR
(86) International application number: PCT/CN2025/073738
(87) International publication number: WO 2025/162088

(57) **Abstract**

A communication method and apparatus are provided, to reduce pilot overheads of a system and power consumption of a terminal or a RAN node caused by pilot measurement. This facilitates energy saving of the terminal or the RAN node. The method includes: The terminal or the RAN node obtains first information, and performs communication based on the first information. The first information includes information about at least one geographic region and a radio environment map parameter of the at least one geographic region, and the radio environment map parameter includes a radio channel parameter and/or a radio transmission parameter associated with the radio channel parameter. The first information further includes at least one of the following: an operating frequency band of the radio environment map parameter, an indication of whether the radio environment map parameter is valid, and a type of the radio environment map parameter, where the type of the radio environment map parameter indicates whether the radio environment map parameter is a ground truth.

## Description

This application claims priority to Chinese Patent Application No. 202410158327.5, filed with the China National Intellectual Property Administration on February 1, 2024 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In a mobile communication network, transmission of radio signals is associated with surrounding physical environments through radio channels (radio channels). Specifically, after a radio electromagnetic wave is emitted from a transmitter, the radio electromagnetic wave finally arrives at a receiver through reflection, scattering, and diffraction by various objects on a propagation path. The transmitter and the receiver may measure channel characteristics based on pilot signals, and select appropriate transmit parameters and receive parameters based on the measurement results.

However, as channel bandwidths, antenna arrays, and transmission channels in a 6th generation (6th generation, 6G) radio network increase, when radio channel features are obtained by measuring pilot signals, a receive end and a transmit end need to perform frequent measurement, resulting in an increase in power consumption of the devices.

### SUMMARY

This application provides a communication method and apparatus to reduce power consumption of a device and help save energy of a terminal.

According to a first aspect, a communication method is provided. The method may be performed by a terminal; may be performed by a component of the terminal, for example, a processor, a chip, or a chip system of the terminal; or may be implemented by a logical module or software that can implement a part or all of functions of the terminal. The method includes: obtaining first information, and performing communication based on the first information. The first information includes information about at least one geographic region and a radio environment map parameter of the at least one geographic region, and the radio environment map parameter includes a radio channel parameter and/or a radio transmission parameter associated with the radio channel parameter. The first information further includes at least one of the following: an operating frequency band of the radio environment map parameter, an indication of whether the radio environment map parameter is valid, and a type of the radio environment map parameter. The type of the radio environment map parameter indicates whether the radio environment map parameter is a ground truth.

Based on this solution, the terminal can pre-obtain the radio channel parameter and/or the radio transmission parameter of the at least one geographic region. When communication is subsequently performed in a geographic region, a pre-obtained radio channel parameter and/or radio transmission parameter of the geographic region may be directly searched for, to perform communication based on the parameter(s). In comparison with a conventional method in which a radio channel parameter and a radio transmission parameter are obtained completely through pilot measurement, this method can reduce pilot overheads of a system, reduce power consumption of the terminal caused by the pilot measurement, and facilitate energy saving of the terminal. In addition, when the radio transmission parameter of the geographic region is pre-obtained, a RAN node does not need to determine the radio transmission parameter, and does not need to indicate the radio transmission parameter to the terminal through signaling, so that processing complexity of the RAN node can be simplified, and signaling overheads can be further reduced.

In a possible design, the obtaining the first information includes: sending second information, where the second information is used to request the radio environment map parameter of the at least one geographic region; and receiving the first information.

Based on this possible design, the terminal may send the second information to the RAN node, to request the radio environment map parameter of the at least one geographic region. In comparison with that the terminal determines the radio environment map parameter of the at least one geographic region, processing complexity of the terminal can be reduced.

In a possible design, the second information includes at least one of the following: location information of the terminal, information indicating a first range, and an identifier of the at least one geographic region. The at least one geographic region is a geographic region in the first range.

In a possible design, the second information further includes at least one of the following: the operating frequency band of the requested radio environment map parameter, the requested radio channel parameter, and the requested radio transmission parameter.

In a possible design, the at least one geographic region includes at least one first geographic region, and the method further includes: sending third information, where the third information is used to request to update a radio environment map parameter of the at least one first geographic region; receiving fourth information, where the fourth information indicates that updating radio environment map parameters of a part or all of first geographic regions in the at least one first geographic region is allowed; and sending the updated radio environment map parameters of the part or all of the first geographic regions.

Based on this possible design, the terminal can request to update the radio environment map parameter, and send the updated radio environment map parameter to the RAN node when the RAN node allows the update, so that the radio environment map parameter is closer to the ground truth, thereby improving communication performance when the radio environment map parameter is used to assist in communication.

In a possible design, the third information includes at least one of the following: the location information of the terminal, information indicating a second range, an identifier of the at least one first geographic region, the operating frequency band of the radio environment map parameter requested to be updated, the radio channel parameter requested to be updated, and the radio transmission parameter requested to be updated. The at least one first geographic region is a geographic region in the second range.

In a possible design, that the fourth information indicates that updating the radio environment map parameters of the part or all of the first geographic regions in the at least one first geographic region is allowed includes: The fourth information indicates a first resource, and the first resource is used to carry the updated radio environment map parameters of the part or all of the first geographic regions.

In a possible design, the at least one geographic region includes at least one second geographic region, and the method further includes: sending a downlink channel parameter measurement quantity measured in the at least one second geographic region, and/or an uplink radio transmission parameter used in the at least one second geographic region.

Based on this possible design, the terminal sends the measured downlink channel parameter measurement quantity and/or the used uplink radio transmission parameter. In this way, the RAN node can update the radio environment map parameter based on the channel parameter measurement quantity and/or the used radio transmission parameter, so that the predicted radio environment map parameter is closer to the ground truth, thereby improving the communication performance when the radio environment map parameter is used to assist in communication.

In a possible design, the sending the downlink channel parameter measurement quantity measured in the at least one second geographic region, and/or the uplink radio transmission parameter used in the at least one second geographic region includes: receiving first configuration information, where the first configuration information is used to configure the terminal to report the downlink channel parameter measurement quantity and/or the used uplink radio transmission parameter; and sending, based on the first configuration information, the downlink channel parameter measurement quantity measured in the at least one second geographic region and/or the uplink radio transmission parameter used in the at least one second geographic region.

In a possible design, that the first configuration information is used to configure the terminal to report the downlink channel parameter measurement quantity and/or the used uplink radio transmission parameter includes: The first configuration information is used to configure at least one of the following: a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource. The downlink reference signal resource is used by the terminal to perform downlink channel measurement. The first time unit indicates reporting of a value of the uplink radio transmission parameter used for uplink transmission in the first time unit. The reporting manner includes periodic reporting, aperiodic reporting, or semi-persistent scheduling reporting. The second resource is used to carry the downlink channel parameter measurement quantity and/or the used uplink radio transmission parameter.

In a possible design, the at least one geographic region includes at least one third geographic region, and the method further includes: sending fifth information. The fifth information is used to feed back credibility of a radio channel parameter and/or a radio transmission parameter of the at least one third geographic region.

Based on this possible design, the terminal can evaluate and feed back credibility of the radio environment map parameter to the RAN node in a timely manner. In this way, the RAN node can perform related processing based on the credibility, for example, trigger correction or update of a parameter with low credibility, or delete the parameter with low credibility, or continue to maintain a parameter with high credibility, to ensure that a radio environment map parameter with high credibility or close to the ground truth can be used in subsequent communication, thereby improving the communication performance.

In a possible design, the fifth information is used to feed back credibility of a radio channel parameter of each first path in the third geographic region, and the radio environment map parameter used by the terminal includes the radio channel parameter of each first path; and/or the fifth information is used to feed back credibility of a radio channel parameter of each first frequency domain subband of the third geographic region, and the radio environment map parameter used by the terminal includes the radio channel parameter of each first frequency domain subband.

Based on this possible design, the credibility of the radio channel parameter of the path or the frequency domain subband used by the terminal can be fed back by using the path or the frequency domain subband as a granularity. In comparison with feedback of credibility of radio channel parameters of all paths or all frequency domain subbands, feedback overheads can be reduced.

In a possible design, the fifth information is used to feed back the credibility of the radio channel parameter of each first path in the third geographic region, and the method further includes: sending sixth information. The sixth information is used to feed back credibility of each first radio channel parameter of each first path, and the radio environment map parameter used by the terminal includes each first radio channel parameter of each first path.

Based on this possible design, the credibility of the radio channel parameter used by the terminal can be fed back by using the radio channel parameter as a granularity, so that feedback precision can be improved. In this way, the RAN node can correct the radio channel parameter more accurately, and accuracy of the radio channel parameter is improved.

In a possible design, the fifth information is used to feed back credibility of each first radio transmission parameter of the third geographic region, and the radio transmission parameter used by the terminal includes each first radio transmission parameter.

Based on this possible design, the credibility of the radio transmission parameter used by the terminal can be fed back by using the radio transmission parameter as a granularity, so that feedback precision can be improved. In this way, the RAN node can correct the radio transmission parameter more accurately, and accuracy of the radio transmission parameter is improved.

In a possible design, the at least one geographic region includes at least one fourth geographic region, and the method further includes: receiving seventh information. The seventh information indicates that a radio environment map parameter of the at least one fourth geographic region is invalid.

Based on this possible design, the RAN node may indicate, to the terminal, that the radio environment map is invalid, to avoid deterioration of the communication performance caused by the terminal performing communication based on an invalid radio environment map or a radio environment map with low credibility.

In a possible design, the method further includes: when it is determined to perform communication in the at least one fourth geographic region, performing channel measurement, and then performing communication based on a channel measurement result.

Based on this possible design, when the radio environment map parameter of the fourth geographic region is invalid, the terminal falls back to a conventional communication manner. This improves compatibility between the solutions of this application and the conventional communication manner.

According to a second aspect, a communication method is provided. The method may be performed by a RAN node; may be performed by a component of the RAN node, for example, a processor, a chip, or a chip system of the RAN node; or may be implemented by a logical module or software that can implement a part or all of functions of the RAN node. The method includes: obtaining first information, and performing communication based on the first information. The first information includes information about at least one geographic region and a radio environment map parameter of the at least one geographic region, and the radio environment map parameter includes a radio channel parameter and/or a radio transmission parameter associated with the radio channel parameter. The first information further includes at least one of the following: an operating frequency band of the radio environment map parameter, an indication of whether the radio environment map parameter is valid, and a type of the radio environment map parameter. The type of the radio environment map parameter indicates whether the radio environment map parameter is a ground truth. For technical effect brought by the second aspect, refer to the technical effect brought by the first aspect. Details are not described herein again.

In a possible design, the obtaining the first information includes: sending second information, where the second information is used to request the radio environment map parameter of the at least one geographic region; and receiving the first information.

In a possible design, the second information includes an identifier of a first cell managed by the RAN node, and the at least one geographic region includes a geographic region in the first cell.

In a possible design, the second information further includes at least one of the following: the operating frequency band of the requested radio environment map parameter, the requested radio channel parameter, and the requested radio transmission parameter.

In a possible design, the at least one geographic region includes at least one first geographic region, and the method further includes: receiving third information, where the third information is used to request to update a radio environment map parameter of the at least one first geographic region; sending fourth information, where the fourth information indicates that updating radio environment map parameters of a part or all of first geographic regions in the at least one first geographic region is allowed; and receiving the updated radio environment map parameters of the part or all of the first geographic regions.

In a possible design, the third information includes at least one of the following: location information of a terminal, information indicating a second range, an identifier of the at least one first geographic region, the operating frequency band of the radio environment map parameter requested to be updated, the radio channel parameter requested to be updated, and the radio transmission parameter requested to be updated. The at least one first geographic region is a geographic region in the second range.

In a possible design, that the fourth information indicates that updating the radio environment map parameters of the part or all of the first geographic regions in the at least one first geographic region is allowed includes: The fourth information indicates a first resource, and the first resource is used to carry the updated radio environment map parameters of the part or all of the first geographic regions.

In a possible design, the at least one geographic region includes at least one second geographic region, and the method further includes: receiving a downlink channel parameter measurement quantity measured in the at least one second geographic region, and/or an uplink radio transmission parameter used in the at least one second geographic region.

In a possible design, the method further includes: sending first configuration information. The first configuration information is used to configure the terminal to report the downlink channel parameter measurement quantity and/or the used uplink radio transmission parameter.

In a possible design, that the first configuration information is used to configure the terminal to report the downlink channel parameter measurement quantity and/or the used uplink radio transmission parameter includes: The first configuration information is used to configure at least one of the following: a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource. The downlink reference signal resource is used by the terminal to perform downlink channel measurement. The first time unit indicates reporting of a value of the uplink radio transmission parameter used for uplink transmission in the first time unit. The reporting manner includes periodic reporting, aperiodic reporting, or semi-persistent scheduling reporting. The second resource is used to carry the downlink channel parameter measurement quantity and/or the used uplink radio transmission parameter.

In a possible design, the at least one geographic region includes at least one third geographic region, and the method further includes: receiving fifth information. The fifth information is used to feed back credibility of a radio channel parameter and/or a radio transmission parameter of the at least one third geographic region.

In a possible design, the fifth information is used to feed back credibility of a radio channel parameter of each first path in the third geographic region, and the radio environment map parameter used by the terminal includes the radio channel parameter of each first path; and/or the fifth information is used to feed back credibility of a radio channel parameter of each first frequency domain subband of the third geographic region, and the radio environment map parameter used by the terminal includes the radio channel parameter of each first frequency domain subband.

In a possible design, when the fifth information is used to feed back the credibility of the radio channel parameter of each first path in the third geographic region, the method further includes: receiving sixth information. The sixth information is used to feed back credibility of each first radio channel parameter of each first path, and the radio environment map parameter used by the terminal includes each first radio channel parameter of each first path.

In a possible design, the fifth information is used to feed back credibility of each first radio transmission parameter of the third geographic region, and the radio transmission parameter used by the terminal includes each first radio transmission parameter.

In a possible design, the at least one geographic region includes at least one fourth geographic region, and the method further includes: receiving seventh information. The seventh information indicates that a radio environment map parameter of the at least one fourth geographic region is invalid.

For technical effect brought by any possible design of the second aspect, refer to technical effect brought by a corresponding design of the first aspect. Details are not described herein again.

With reference to the first aspect or the second aspect, in a possible design, information about a geographic region includes at least one of the following: an identifier of the geographic region, center location coordinates of the geographic region, and spatial resolution of the geographic region.

With reference to the first aspect or the second aspect, in a possible design, the first information further includes the credibility of the radio environment map parameter. For example, the credibility of the radio environment map parameter is used to reflect (or represents) communication quality when communication is performed based on the radio environment map parameter.

With reference to the first aspect or the second aspect, in a possible design, the radio channel parameter includes at least one of the following: a channel multipath power, a channel multipath delay, a channel multipath azimuth angle of arrival, a channel multipath azimuth angle of departure, a channel multipath zenith angle of arrival, a channel multipath zenith angle of departure, or a frequency domain channel response on at least one frequency domain bandwidth.

With reference to the first aspect or the second aspect, in a possible design, the radio transmission parameter includes at least one of the following: a modulation and coding scheme MCS, an uplink transmit power, an uplink timing advance TA, a precoding matrix indicator PMI, a beam indicator, and a reference signal received power.

With reference to the first aspect or the second aspect, in a possible design, the type of the radio environment map parameter includes the ground truth or a predicted value.

According to a third aspect, a communication apparatus is provided, configured to implement various methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

In a possible design, when the communication apparatus is configured to implement the method according to any one of the first aspect and the possible designs of the first aspect,
the processing module is configured to obtain first information; and the transceiver module is configured to perform communication based on the first information. The first information includes information about at least one geographic region and a radio environment map parameter of the at least one geographic region, and the radio environment map parameter includes a radio channel parameter and/or a radio transmission parameter associated with the radio channel parameter. The first information further includes at least one of the following: an operating frequency band of the radio environment map parameter, an indication of whether the radio environment map parameter is valid, and a type of the radio environment map parameter. The type of the radio environment map parameter indicates whether the radio environment map parameter is a ground truth.

Optionally, that the processing module is configured to obtain the first information includes: The processing module is configured to send second information via the transceiver module. The second information is used to request the radio environment map parameter of the at least one geographic region. The processing module is further configured to receive the first information via the transceiver module.

Optionally, the second information includes at least one of the following: location information of a terminal, information indicating a first range, and an identifier of the at least one geographic region. The at least one geographic region is a geographic region in the first range.

Optionally, the second information further includes at least one of the following: the operating frequency band of the requested radio environment map parameter, the requested radio channel parameter, and the requested radio transmission parameter.

Optionally, the at least one geographic region includes at least one first geographic region. The transceiver module is further configured to send third information. The third information is used to request to update a radio environment map parameter of the at least one first geographic region. The transceiver module is further configured to receive fourth information. The fourth information indicates that updating radio environment map parameters of a part or all of first geographic regions in the at least one first geographic region is allowed. The transceiver module is further configured to send the updated radio environment map parameters of the part or all of the first geographic regions.

Optionally, the third information includes at least one of the following: the location information of the terminal, information indicating a second range, an identifier of the at least one first geographic region, the operating frequency band of the radio environment map parameter requested to be updated, the radio channel parameter requested to be updated, and the radio transmission parameter requested to be updated. The at least one first geographic region is a geographic region in the second range.

Optionally, that the fourth information indicates that updating the radio environment map parameters of the part or all of the first geographic regions in the at least one first geographic region is allowed includes: The fourth information indicates a first resource, and the first resource is used to carry the updated radio environment map parameters of the part or all of the first geographic regions.

Optionally, the at least one geographic region includes at least one second geographic region. The transceiver module is further configured to send a downlink channel parameter measurement quantity measured in the at least one second geographic region, and/or an uplink radio transmission parameter used in the at least one second geographic region.

Optionally, that the transceiver module is further configured to send the downlink channel parameter measurement quantity measured in the at least one second geographic region, and/or the uplink radio transmission parameter used in the at least one second geographic region includes: The transceiver module is further configured to receive first configuration information. The first configuration information is used to configure the terminal to report the downlink channel parameter measurement quantity and/or the used uplink radio transmission parameter. The transceiver module is further configured to send, based on the first configuration information, the downlink channel parameter measurement quantity measured in the at least one second geographic region and/or the uplink radio transmission parameter used in the at least one second geographic region.

Optionally, that the first configuration information is used to configure the terminal to report the downlink channel parameter measurement quantity and/or the used uplink radio transmission parameter includes: The first configuration information is used to configure at least one of the following: a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource. The downlink reference signal resource is used by the terminal to perform downlink channel measurement. The first time unit indicates reporting of a value of the uplink radio transmission parameter used for uplink transmission in the first time unit. The reporting manner includes periodic reporting, aperiodic reporting, or semi-persistent scheduling reporting. The second resource is used to carry the downlink channel parameter measurement quantity and/or the used uplink radio transmission parameter.

Optionally, the at least one geographic region includes at least one third geographic region. The transceiver module is further configured to send fifth information. The fifth information is used to feed back credibility of a radio channel parameter and/or a radio transmission parameter of the at least one third geographic region.

Optionally, the fifth information is used to feed back credibility of a radio channel parameter of each first path in the third geographic region, and the radio environment map parameter used by the terminal includes the radio channel parameter of each first path; and/or the fifth information is used to feed back credibility of a radio channel parameter of each first frequency domain subband of the third geographic region, and the radio environment map parameter used by the terminal includes the radio channel parameter of each first frequency domain subband.

Optionally, the fifth information is used to feed back the credibility of the radio channel parameter of each first path in the third geographic region. The transceiver module is further configured to send sixth information. The sixth information is used to feed back credibility of each first radio channel parameter of each first path, and the radio environment map parameter used by the terminal includes each first radio channel parameter of each first path.

Optionally, the fifth information is used to feed back credibility of each first radio transmission parameter of the third geographic region, and the radio transmission parameter used by the terminal includes each first radio transmission parameter.

Optionally, the at least one geographic region includes at least one fourth geographic region. The transceiver module is further configured to receive seventh information. The seventh information indicates that a radio environment map parameter of the at least one fourth geographic region is invalid.

Optionally, the processing module is further configured to: when it is determined to perform communication in the at least one fourth geographic region, perform channel measurement, and then perform communication based on a channel measurement result.

In a possible design, when the communication apparatus is configured to implement the method according to any one of the second aspect and the possible designs of the second aspect,
the processing module is configured to obtain first information; and the transceiver module is configured to perform communication based on the first information. The first information includes information about at least one geographic region and a radio environment map parameter of the at least one geographic region, and the radio environment map parameter includes a radio channel parameter and/or a radio transmission parameter associated with the radio channel parameter. The first information further includes at least one of the following: an operating frequency band of the radio environment map parameter, an indication of whether the radio environment map parameter is valid, and a type of the radio environment map parameter. The type of the radio environment map parameter indicates whether the radio environment map parameter is a ground truth.

Optionally, that the processing module is configured to obtain the first information includes: The processing module is configured to send second information via the transceiver module. The second information is used to request the radio environment map parameter of the at least one geographic region. The processing module is further configured to receive the first information via the transceiver module.

Optionally, the second information includes an identifier of a first cell managed by a RAN node, and the at least one geographic region includes a geographic region in the first cell.

Optionally, the second information further includes at least one of the following: the operating frequency band of the requested radio environment map parameter, the requested radio channel parameter, and the requested radio transmission parameter.

Optionally, the at least one geographic region includes at least one first geographic region. The transceiver module is further configured to receive third information. The third information is used to request to update a radio environment map parameter of the at least one first geographic region. The transceiver module is further configured to send fourth information. The fourth information indicates that updating radio environment map parameters of a part or all of first geographic regions in the at least one first geographic region is allowed. The transceiver module is further configured to receive the updated radio environment map parameters of the part or all of the first geographic regions.

Optionally, the third information includes at least one of the following: location information of a terminal, information indicating a second range, an identifier of the at least one first geographic region, the operating frequency band of the radio environment map parameter requested to be updated, the radio channel parameter requested to be updated, and the radio transmission parameter requested to be updated. The at least one first geographic region is a geographic region in the second range.

Optionally, that the fourth information indicates that updating the radio environment map parameters of the part or all of the first geographic regions in the at least one first geographic region is allowed includes: The fourth information indicates a first resource, and the first resource is used to carry the updated radio environment map parameters of the part or all of the first geographic regions.

Optionally, the at least one geographic region includes at least one second geographic region. The transceiver module is further configured to receive a downlink channel parameter measurement quantity measured in the at least one second geographic region, and/or an uplink radio transmission parameter used in the at least one second geographic region.

Optionally, the transceiver module is further configured to send first configuration information. The first configuration information is used to configure the terminal to report the downlink channel parameter measurement quantity and/or the used uplink radio transmission parameter.

Optionally, that the first configuration information is used to configure the terminal to report the downlink channel parameter measurement quantity and/or the used uplink radio transmission parameter includes: The first configuration information is used to configure at least one of the following: a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource. The downlink reference signal resource is used by the terminal to perform downlink channel measurement. The first time unit indicates reporting of a value of the uplink radio transmission parameter used for uplink transmission in the first time unit. The reporting manner includes periodic reporting, aperiodic reporting, or semi-persistent scheduling reporting. The second resource is used to carry the downlink channel parameter measurement quantity and/or the used uplink radio transmission parameter.

Optionally, the at least one geographic region includes at least one third geographic region. The transceiver module is further configured to receive fifth information. The fifth information is used to feed back credibility of a radio channel parameter and/or a radio transmission parameter of the at least one third geographic region.

Optionally, the fifth information is used to feed back credibility of a radio channel parameter of each first path in the third geographic region, and the radio environment map parameter used by the terminal includes the radio channel parameter of each first path; and/or the fifth information is used to feed back credibility of a radio channel parameter of each first frequency domain subband of the third geographic region, and the radio environment map parameter used by the terminal includes the radio channel parameter of the first frequency domain subband.

Optionally, when the fifth information is used to feed back the credibility of the radio channel parameter of each first path in the third geographic region, the transceiver module is further configured to receive sixth information. The sixth information is used to feed back credibility of each first radio channel parameter of each first path, and the radio environment map parameter used by the terminal includes each first radio channel parameter of each first path.

Optionally, the fifth information is used to feed back credibility of each first radio transmission parameter of the third geographic region, and the radio transmission parameter used by the terminal includes each first radio transmission parameter.

Optionally, the at least one geographic region includes at least one fourth geographic region. The transceiver module is further configured to receive seventh information. The seventh information indicates that a radio environment map parameter of the at least one fourth geographic region is invalid.

Optionally, information about a geographic region includes at least one of the following: an identifier of the geographic region, center location coordinates of the geographic region, and spatial resolution of the geographic region.

Optionally, the first information further includes credibility of the radio environment map parameter. For example, the credibility of the radio environment map parameter is used to reflect (or represents) communication quality when communication is performed based on the radio environment map parameter.

Optionally, the radio channel parameter includes at least one of the following: a channel multipath power, a channel multipath delay, a channel multipath azimuth angle of arrival, a channel multipath azimuth angle of departure, a channel multipath zenith angle of arrival, a channel multipath zenith angle of departure, or a frequency domain channel response on at least one frequency domain bandwidth.

Optionally, the radio transmission parameter includes at least one of the following: a modulation and coding scheme MCS, an uplink transmit power, an uplink timing advance TA, a precoding matrix indicator PMI, a beam indicator, and a reference signal received power.

Optionally, the type of the radio environment map parameter includes the ground truth or a predicted value.

According to a fourth aspect, a communication apparatus is provided, including a processor and a memory. The memory is configured to store computer instructions, and when the processor executes the instructions, the communication apparatus is enabled to perform the method according to any one of the foregoing aspects.

According to a fifth aspect, a communication apparatus is provided, including a processor and a communication interface. The communication interface is configured to communicate with a module outside the communication apparatus, and the processor is configured to execute a computer program or instructions, to enable the communication apparatus to perform the method according to any one of the foregoing aspects.

According to a sixth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor.

According to a seventh aspect, a communication apparatus is provided (for example, the communication apparatus may be a chip or a chip system). The communication apparatus includes a processor configured to implement functions in any one of the implementations of the first aspect or the second aspect.

In some possible designs, the communication apparatus includes the memory, and the memory is configured to store necessary program instructions and data.

In some possible designs, when the apparatus is a chip system, the apparatus may include a chip, or may include a chip and another discrete component.

In a possible design, the communication apparatus according to the third aspect to the seventh aspect may be the terminal in the first aspect, or an apparatus included in the terminal, for example, a chip or a chip system; or the communication apparatus may be the RAN node according to the second aspect, or an apparatus included in the RAN node, for example, a chip or a chip system.

According to an eighth aspect, a communication apparatus is provided. The communication apparatus may be a terminal, or may be a module or unit (for example, a chip, or a chip system, or a circuit) that is in a terminal and that is in a one-to-one correspondence with the method/operation/step/action described in the first aspect, or may be a module or unit that can be used in matching with a terminal. Alternatively, the communication apparatus may be a RAN node, or may be a module or unit (for example, a chip, or a chip system, or a circuit) that is in a RAN node and that is in a one-to-one correspondence with the method/operation/step/action described in the second aspect, or may be a module or unit that can be used in matching with a RAN node.

It may be understood that when the communication apparatus according to any one of the third aspect to the eighth aspect is the chip, a sending action/function of the communication apparatus may be understood as outputting information, and a receiving action/function of the communication apparatus may be understood as inputting information.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the implementations of the first aspect or the second aspect.

According to a tenth aspect, a computer program product including instructions is provided. When the computer program product runs on a communication apparatus, the communication apparatus is enabled to perform the method according to any one of the implementations of the first aspect or the second aspect.

According to an eleventh aspect, a communication system is provided. The communication system may include a terminal and a RAN node. The terminal is configured to implement the method according to any one of the first aspect and the design manners of the first aspect, and the RAN node is configured to implement the method according to any one of the second aspect and the design manners of the second aspect.

For technical effect brought by any design manner in the third aspect to the eleventh aspect, refer to technical effect brought by different design manners in the first aspect or the second aspect. Details are not described herein again.

### BRIEF DESCRIPTION OF DRAWINGS

FIG. 1 is a diagram of power consumption of a terminal according to this application;
FIG. 2 is a diagram of resource overheads of beam sweeping according to this application;
FIG. 3 is a diagram of a structure of a communication system according to this application;
FIG. 4 is a schematic flowchart of parameter determining according to this application;
FIG. 5A to FIG. 7 are schematic flowcharts of a communication method according to this application;
FIG. 8 is a diagram of a manner of updating a radio environment map parameter according to this application;
FIG. 9 and FIG. 10 are schematic flowcharts of a communication method according to this application;
FIG. 11 is a diagram of a structure of a communication apparatus according to this application;
FIG. 12 is a diagram of a structure of another communication apparatus according to this application; and
FIG. 13 is a diagram of a structure of still another communication apparatus according to this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts of embodiments, reference may be made to each other. In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. The following implementations of this application are not intended to limit the protection scope of this application.

In a conventional mobile communication network, before a transmitter and a receiver communicate, channel features are usually measured based on pilot channels, and appropriate transmit parameters and receive parameters are selected based on a measurement result. However, with development of the mobile communication network, channel bandwidths, antenna arrays, and transmission channels increase continuously, and a conventional method for obtaining the radio channel features by measuring the pilot signals faces great challenges.

Because a transmit end and a receive end need to frequently perform channel measurement to obtain channel information, power consumption of a transmit end device and a receive end device increases. In addition, because the transmit end and the receive end need to perform frequent measurement, the devices cannot enter a deep sleep state to save energy. For example, a proportion of beam sweeping measurement power consumption on a terminal side increases to more than 30%.

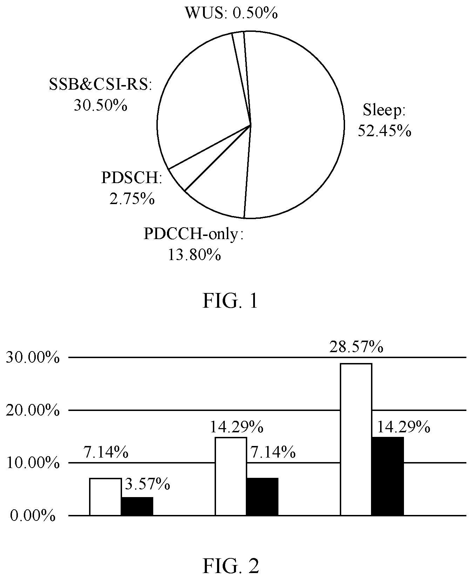

As shown in FIG. 1, power consumption occupied by a physical downlink shared channel (physical downlink shared channel, PDSCH), physical downlink control channel (physical downlink control channel, PDCCH)-only, sleep (sleep), a wake-up signal (wake-up signal, WUS), a synchronization signal/PBCH block (synchronization signal/PBCH block, SSB), and a CSI-RS on the terminal side is: 2.75%, 13.80%, 52.45%, 0.50%, and 30.50%.

In addition, because the bandwidths increase, transmission overheads of the pilot signals increase sharply. As a result, resources used for data transmission are reduced, and communication performance deteriorates. A millimeter wave beam sweeping is used as an example. As a base station array scale increases, as shown in FIG. 2, channel state information reference signal (channel state information reference signal, CSI-RS) pilot overheads required for analog beam sweeping increase to more than 20% of system resources.

Refer to FIG. 2. When a beam sweeping period is 20 milliseconds (millisecond, ms), pilot overheads in a 1024 array (256 beams) scenario, a 2048 array (512 beams) scenario, and a 4096 array (1024 beams) scenario respectively occupy 7.14%, 14.29%, and 28.57% of the system resources. When the beam sweeping period is 40 ms, the pilot overheads in the 1024 array (256 beams) scenario, the 2048 array (512 beams) scenario, and the 4096 array (1024 beams) scenario respectively occupy 3.57%, 7.14%, and 14.29% of the system resources.

In view of this, this application provides a communication method. In the method, a terminal or a base station may pre-obtain a radio channel parameter and/or a radio transmission parameter of at least one geographic region. During subsequent communication in a geographic region, a radio channel parameter and/or a radio transmission parameter of the geographic region may be searched for, to perform communication based on the radio channel parameter and/or the radio transmission parameter of the geographic region. For example, the radio channel parameter and/or the radio transmission parameter of the geographic region may be obtained through prediction based on physical environment information reconstructed through sensing. In comparison with a conventional method in which a radio channel parameter and a radio transmission parameter are obtained completely through pilot measurement, power consumption and system overheads can be reduced.

The technical solutions in embodiments of this application may be applied to various communication systems. The communication system may be a 3rd Generation Partnership Project (3rd generation partnership project, 3GPP) communication system, for example, a 4th generation (4th generation, 4G) system such as a long term evolution (long term evolution, LTE) system, a 5G system such as a new radio (new radio, NR) system, an LTE and 5G hybrid networking system, a non-terrestrial network (non-terrestrial network, NTN), or another next generation communication system such as a 6th generation (6th generation, 6G) communication system. Alternatively, the communication system may be a non-3GPP communication system. This is not limited.

For example, a part of nodes in the communication system may have a communication function and a sensing function, or the communication system may be an integrated sensing and communication (integrated sensing and communication, ISAC) system, also referred to as a communication and sensing integration system, or referred to as a joint communication and sensing (joint communication and sensing, JCS/JCAS) system.

Sensing, also referred to as radio sensing, refers to transmitting electromagnetic energy into space, and receiving a radio wave reflected by an object in the space, to obtain information about the object through calculation, for example, parameters such as a location, a direction, a height, a speed, a size, and a moving path, where internal and external shapes and structures of the object can be detected. Transmission, echoes, reflection, and scattering of radio waves are explored, to sense and better understand a physical world. As one of electromagnetic wave sensing technologies, the radio sensing technology may be used as an important alternative technology for security check, hidden object detection, environment reconstruction, and the like due to penetrability and security of the radio sensing technology.

In the ISAC system, in one aspect, widely deployed communication nodes, such as radio network nodes (base stations or terminals), can provide strong sensing capabilities due to wide operating frequency bandwidths, high operating frequency bands, and large antenna arrays, thereby greatly improving environment sensing precision and feasibility of a radio network. In another aspect, sensing results of the radio network nodes may be used to reconstruct a physical environment, and the reconstructed physical environment may be used to predict an electromagnetic wave transmission feature between the radio network nodes, thereby assisting in communication.

The foregoing communication systems applicable to this application are merely examples for description, and the communication systems applicable to this application are not limited thereto. The communication systems provided in this application constitute no limitation on the solutions of this application. Unified descriptions are provided herein and details are not described below again.

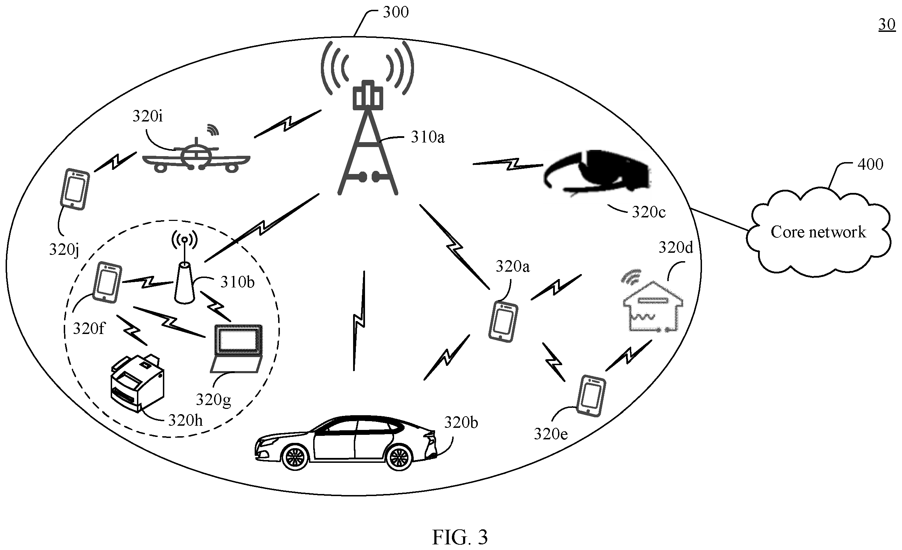

FIG. 3 is a diagram of a possible and non-limiting system. As shown in FIG. 3, the communication system 30 includes a radio access network (radio access network, RAN) 300 and a core network (core network, CN) 400. The RAN 300 includes at least one RAN node (310a and 310b in FIG. 3, collectively referred to as 310) and at least one terminal (320a to 320j in FIG. 3, collectively referred to as 320). The RAN 300 may further include another RAN node, for example, a wireless relay device and/or a wireless backhaul device (not shown in FIG. 3). The terminal 320 is connected to the RAN node 310 in a wireless manner. The RAN node 310 is connected to the core network 400 in a wireless or wired manner. A core network device in the core network 400 and the RAN node 310 in the RAN 300 may be different physical devices, or may be a same physical device that integrates a logical function of the core network and a logical function of the radio access network.

The RAN 300 may be a 3GPP-related cellular system, for example, a 4G or 5G mobile communication system, or a future-oriented evolved system (for example, a 6G mobile communication system). The RAN 300 may alternatively be an open access network (open RAN, O-RAN or ORAN), a cloud radio access network (cloud radio access network, CRAN), or a wireless fidelity (wireless fidelity, Wi-Fi) system. The RAN 300 may alternatively be a communication system that integrates two or more of the foregoing systems.

The RAN node 310 may also be referred to as an access network device, a RAN entity, an access node, or the like sometimes, and forms a part of the communication system, to help the terminal implement radio access. A plurality of RAN nodes 310 in the communication system 30 may be nodes of a same type, or may be nodes of different types. In some scenarios, roles of the RAN node 310 and the terminal 320 are relative. For example, a network element 320i in FIG. 3 may be a helicopter or an uncrewed aerial vehicle, and may be configured as a mobile base station. For the terminal 320j that access the RAN 300 via the network element 320i, the network element 320i is a base station. However, for the base station 310a, the network element 320i is a terminal. The RAN node 310 and the terminal 320 are both referred to as communication apparatuses sometimes. For example, the network elements 310a and 310b in FIG. 3 may be understood as communication apparatuses having a base station function, and the network elements 320a to 320j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 310a in FIG. 3), a micro base station or an indoor station (for example, 310b in FIG. 3), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). A part or all of functions of the RAN node in this application may alternatively be implemented by using a software function running on hardware, or may be implemented by using a virtualized function instantiated on a platform (for example, a cloud platform). The RAN node in this application may alternatively be a logical node, a logical module, or software that can implement a part or all of functions of the RAN node.

In another possible scenario, a plurality of RAN nodes coordinate to assist the terminal in implementing radio access, and different RAN nodes each implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, smart office, a smart wearable device, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that with evolution of a network architecture and emergence of new service scenarios, the technical solutions provided in embodiments of this application are also applicable to similar technical problems.

Based on the communication system shown in FIG. 3, the following describes a communication method according to an embodiment of this application by using interaction between a terminal and a RAN node as an example. It should be noted that names of messages, parameters, information, or the like between the terminal and the RAN node in the following embodiments of this application are merely examples, and there may be other names in another embodiment. This is not specifically limited in the method provided in this application.

It may be understood that in embodiments of this application, the terminal or the RAN node may perform a part or all of steps in embodiments of this application. These steps or operations are merely examples. In embodiments of this application, other operations or various variations of the operations may be further performed. In addition, the steps may be performed in a sequence different from a sequence presented in embodiments of this application, and not all of operations in embodiments of this application may be performed.

It may be understood that, in this application, an example in which the RAN node and the terminal perform an interaction example is used for description. However, execution bodies of the interaction example are not limited in this application. For example, a method performed by the RAN node in this application may be performed by a module (for example, a chip, a chip system, or a processor) used in the RAN node, or may be implemented by a logical node, a logical module, or software that can implement a part or all of functions of the RAN node; and a method performed by the terminal in this application may be performed by a module (for example, a chip, a chip system, or a processor) used in the terminal, or may be implemented by a logical node, a logical module, or software that can implement a part or all of functions of the terminal.

In addition, in this application, "sending information" may be understood as that a device sends information to another device, or may be understood as that a logical module in a device sends information to another logical module. For example, "the terminal sends information" may be understood as that the terminal sends information to another device (for example, the RAN node), or may be understood as that a logical module 1 (for example, a processing module) in the terminal sends information to a logical module 2 (for example, a transceiver module) in the terminal.

In this application, "receiving information" may be understood as that a device receives information from another device, or may be understood as that a logical module in the device receives information from another logical module. For example, "the terminal receives information" may be understood as that the terminal receives information from another device (for example, the RAN node), or may be understood as that a logical module 1 (for example, a processing module) in the terminal receives information from a logical module 2 (for example, a transceiver module) in the terminal.

In this application, "sending information to ... (for example, the RAN node)" or a related illustration in the accompanying drawings may be understood as that a destination end of the information is the RAN node, and may include directly or indirectly sending information to the RAN node. "Receiving information from... (for example, the RAN node)", or "receiving, from... (for example, a RAN node), information", or "receiving information sent by (for example, the RAN node)" or a related illustration in the accompanying drawings may be understood as that a source end of the information is the RAN node, and may include directly or indirectly receiving information from the RAN node. Information may undergo necessary processing, for example, a format change, between a source end and a destination end of information sending. However, the destination end may understand valid information from the source end. Similar expressions in this application may be understood similarly. Details are not described herein again.

To facilitate understanding of the technical solutions in embodiments of this application, before the communication method provided in this application is described, an information set (or an information group or another name) of a geographic region provided in this application is first described.

In a possible implementation, the geographic region may be a three-dimensional spatial region, or may be referred to as a spatial region, a three-dimensional region, a three-dimensional grid (3D grid), a grid (grid), or the like. A name of the geographic region is not specifically limited in this application. In addition, the geographic region may alternatively be a plane region. This is not specifically limited in this application.

In a possible implementation, the geographic region may have at least one of the following attributes: shape, contour, size, radius, area, geographic location, height, and the like. Shapes, contours, sizes, radii, and areas of different geographic regions may be the same or may be different. Different geographic regions have different geographic locations. Different geographic regions may overlap or may not overlap.

In a possible implementation, the contour of the geographic region and points in the geographic region may be described based on a three-dimensional coordinate system such as an earth-centered earth-fixed (earth-centered earth-fixed, ECEF) coordinate system, a geodetic coordinate system (geodetic coordinate system), or an earth-centered inertial (earth-centered inertial, ECI) coordinate system.

In a possible implementation, the shape of the geographic region may be a regular hexagon, or may be another shape such as a regular pentagon, a circle, or an ellipse. Alternatively, the shape of the geographic region may be an irregular shape. This is not limited.

In a possible implementation, a plurality of geographic regions may be divided on the earth, and the plurality of geographic regions are indexed (for example, numbered). For example, a geographic location of a geographic region is determined by an identifier of the geographic region, that is, the geographic location of the geographic region may be obtained based on the identifier of the geographic region, or there is an association relationship between the identifier of the geographic region and the geographic location of the geographic region. For example, a plurality of geographic regions may be obtained through discretization on the earth, each geographic region corresponds to one identifier, and a geographic location of the geographic region may be obtained based on the identifier of the geographic region.

The information set of the geographic region includes information about the geographic region and a radio environment map parameter of the geographic region. The radio environment map parameter may also be referred to as radio environment map information. Certainly, the radio environment map parameter may also have another name. This is not limited in this application.

The information about the geographic region may also be referred to as description information or indication information of the geographic region, and indicates or is used to identify the geographic region. The information about the geographic region may include at least one of the following: an identifier (identifier, ID) of the geographic region, central location coordinates of the geographic region, or spatial resolution of the geographic region.

For example, the identifier of the geographic region is used to uniquely identify the geographic region. The central location coordinates of the geographic region are coordinates in the three-dimensional coordinate system (for example, the ECEF coordinate system, the geodetic coordinate system, or the ECI coordinate system), and may be represented as (X, Y, Z). The spatial resolution of the geographic region may indicate the size or the area of the geographic region, for example, may be represented as *a* ∗ *b* ∗ *c*, where *a* may be a value on an x-axis of the three-dimensional coordinate system, and represents a length in an x-axis direction of the geographic region; *b* may be a value on a y-axis of the three-dimensional coordinate system, and represents a length in a y-axis direction of the geographic region; and *c* may be a value on a z-axis of the three-dimensional coordinate system, and represents a length in a z-axis direction of the geographic region. The spatial resolution may be in a unit of meter (meter, m), or certainly may be in another length unit, which is not limited.

The radio environment map parameter of the geographic region includes a radio channel parameter and/or a radio transmission parameter associated with the radio channel parameter.

In a possible implementation, the radio channel parameter of the geographic region may be a channel parameter received in the geographic region after a signal sent from a transmitter passes through a radio environment. The radio channel parameter may include a time domain channel parameter of each path in a multipath channel and/or a frequency domain channel parameter on at least one frequency domain bandwidth. The frequency domain bandwidth may be a frequency domain subband, or may be a frequency domain wideband. This is not limited.

For example, the frequency domain channel parameter may be a frequency domain channel response or a frequency domain channel coefficient. In embodiments of this application, the frequency domain channel response or the frequency domain channel coefficient may be represented in a complex form or a frequency domain response function, and relates to an amplitude and a phase. The frequency domain response function is usually denoted as *H*(*f*), for example, *H*(*f*) = *A*(*f*)*e*^{*jφ*(*f*)}, where *A*(*f*) represents the amplitude, and *φ*(*f*) represents the phase. Alternatively, the frequency domain channel response or the frequency domain channel coefficient may be represented based on a quantized value, for example, represented based on an eigenvector, a discrete Fourier transform (discrete fourier transform, DFT) vector, or the like.

The time domain channel parameter may include at least one of the following: a channel multipath power (power), a channel multipath delay (delay), a channel multipath azimuth angle of arrival (azimuth angle of arrival, AOA), a channel multipath azimuth angle of departure (azimuth angle of departure, AOD), a channel multipath zenith angle of arrival (zenith angle of arrival, ZOA), and a channel multipath zenith angle of departure (zenith angle of departure, ZOD). For example, a multipath channel in a geographic region includes *L* paths, and radio channel parameters of the geographic region may be represented as:
*power*₁,*delay*₁,*AOA*₁,*AOD*₁,*ZOA*₁,*ZOD*₁
*power*₂,*delay*₂,*AOA*₂,*AOD*₂,*ZOA*₂,*ZOD*₂
   ...
*power_{L}*,*delay_{L}*, *AOA_{L}*,*AOD_{L}*,*ZOA_{L}*,*ZOD_{L}*

The subscripts 1, 2, ..., and *L* indicate indexes of paths in the multipath channel.

For example, the power, the delay, the AOA, the AOD, the ZOA, the ZOD, and the frequency domain channel response may be collectively referred to as or constitute a universal set of radio channel parameters.

In a possible implementation, the radio transmission parameter of the geographic region may be a radio transmission parameter that needs to be used during communication in the geographic region. The radio transmission reference may include at least one of the following: a modulation and coding scheme (modulation and coding scheme, MCS), an uplink transmit power, an uplink timing advance (timing advance, TA), a precoding matrix indicator (precoding matrix indicator, PMI), a beam indicator, and a reference signal received power.

For example, the MCS, the uplink transmit power, the uplink TA, the PMI, the beam indicator, and the parameter signal received power may be collectively referred to as or constitute a universal set of radio transmission parameters.

Optionally, the information set of the geographic region further includes at least one of the following: an operating frequency band of the radio environment map parameter, an indication of whether the radio environment map parameter is valid, and a type of the radio environment map parameter. Further, the information set of the geographic region may further include credibility of the radio environment map parameter.

In a possible implementation, the operating frequency band of the radio environment map parameter may also be understood as an effective frequency band or an applied frequency band of the radio environment map parameter. For a same geographic region, (values of) radio environment map parameters may be different in different frequency bands.

In a possible implementation, whether the radio environment map parameter is valid may be understood as whether the radio environment map parameter is available, or whether the radio environment map parameter is available for communication. For example, whether the radio environment map parameter is valid may be represented by on or off, where on may indicate that the radio environment map parameter is valid, and off indicates that the radio environment map parameter is invalid.

In a possible implementation, the type of the radio environment map parameter indicates whether the radio environment map parameter is a ground truth (ground truth). For example, the type of the radio environment map parameter may include a ground truth or a predicted value. The ground truth may refer to a radio channel parameter obtained through channel measurement and/or a radio transmission parameter actually used during communication.

In a possible implementation, the credibility of the radio environment map parameter may be evaluated based on communication quality or communication performance during communication performed by the terminal or the RAN node based on the radio environment map parameter, or the credibility of the radio environment map parameter is used to reflect or represents the communication quality or the communication performance during communication performed based on the radio environment map parameter.

For example, the credibility of the radio environment map parameter may be represented based on a credibility level. If a credibility level of radio environment map parameters of a geographic region is high, it indicates that a result of evaluation performed by the RAN node or the terminal on the radio environment map parameters of the geographic region is high, that is, the communication quality or the communication performance is good when the radio environment map parameters are used for communication. Good communication performance may include a low bit error rate or a small quantity of retransmissions.

If the credibility level is low, it indicates that the result of evaluation performed by the RAN node or the terminal on the radio environment map parameters of the geographic region is low, that is, the communication quality or the communication performance is poor when the radio environment map parameters are used for communication, or it indicates that the radio environment map parameters are not used by the RAN node or the terminal, or it indicates that the RAN node or the terminal has high evaluation on a part of parameters in the radio environment map parameters, and low evaluation on another part of parameters in the radio environment map parameters.

In conclusion, content and descriptions of the information set of the geographic region may be shown in Table 1.

**Table 1**

| Information about a geographic region | Radio environment map parameter | Operating frequency band (optional) | Indication of whether the parameter is valid (optional) | Type (optional) | Credibility (optional) |
|---|---|---|---|---|---|
| Identifier, central location coordinates, or spatial resolution | Radio channel parameter: time domain multipath channel parameters (a power, a delay, an AOA, an AOD, a ZOA, and a ZOD) and/or a frequency domain channel parameter | Radio environment map parameters corresponding to different frequency bands may be different | On/Off (on/off) | Whether it is a ground truth | Evaluation may be performed based on communication quality |
| | Radio transmission parameters: an MCS, an uplink transmit power, an uplink TA, a PMI, a beam indicator, and a reference signal received power | | | | |

In a possible implementation, a map corresponding to a physical environment may be understood as a physical environment map, and the physical environment map includes a building, a road, an object, and the like. There may further be a plurality of nodes in the physical environment, such as a base station, a terminal, and a TRP. Each node may learn of physical environment information in the following two manners:
Manner A: The physical environment information is obtained by using a multi-modal sensing and positioning technology. For example, the physical environment information may include information about the object in the physical environment, such as a location, a shape, and a material.
Manner B: In an artificial intelligence (artificial intelligence, AI) or machine learning (machine learning, ML) manner, the physical environment information, such as a virtual TRP location, is inferred based on a channel measurement result.

Further, the physical environment or the physical environment map may be divided into a plurality of geographic regions. A radio channel parameter and/or a radio transmission parameter of the geographic region are/is determined based on physical environment information of the geographic region. Because the radio channel parameter and/or the radio transmission parameter of the geographic region in the physical environment map are/is determined, the radio channel parameter and/or the radio transmission parameter may also be understood as a radio environment map parameter(s).

In a possible implementation, that the radio channel parameter is determined based on the physical environment information may include: In the AI or ML manner, a new radio channel parameter is obtained through inference by training a known dataset (including the physical environment information and the radio channel parameter). In addition, a multipath propagation feature of a radio signal in the physical environment may be predicted by using a ray-tracing modeling method, to determine the radio channel parameter.

For the radio transmission parameter, the radio transmission parameter may be calculated by analyzing the radio channel parameter; or the new radio transmission parameter may be obtained through inference by training the known dataset (including the radio channel parameter and the radio transmission parameter) in the AL or ML manner.

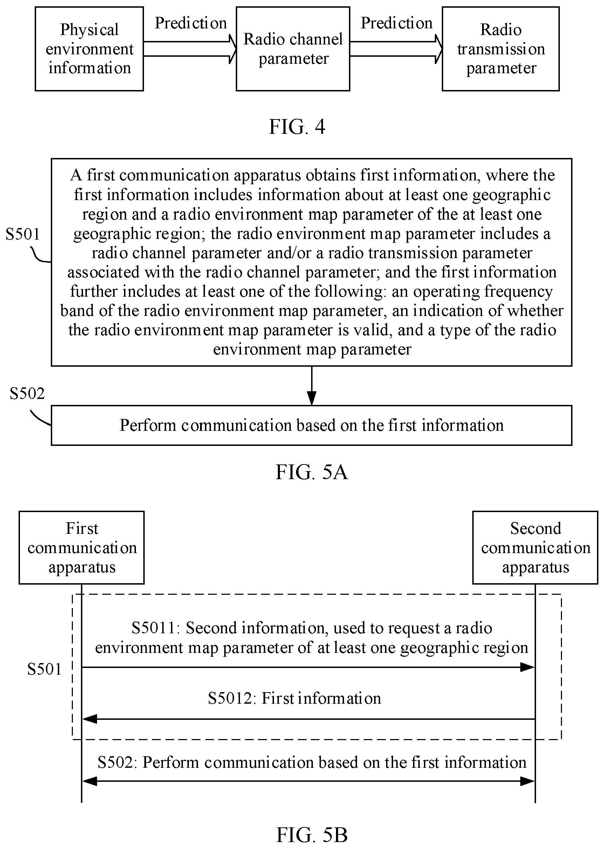

For example, when the radio channel parameter is determined based on radio environment information, and the radio transmission parameter is determined based on the radio channel parameter, as shown in FIG. 4, it may be considered that the radio channel parameter is obtained through prediction based on the physical environment information, and the radio transmission parameter is obtained through prediction based on the radio channel parameter.

The following describes the communication method provided in embodiments of this application. FIG. 5A is a schematic flowchart of a communication method according to an embodiment of this application. The communication method may include the following steps.

S501: A first communication apparatus obtains first information. For example, the first communication apparatus may be a terminal or a RAN node.

The first information includes information about at least one geographic region and a radio environment map parameter of the at least one geographic region. For the radio environment map parameter of the geographic region, refer to the foregoing related description. Details are not described herein again.

Further, the first information further includes at least one of the following of each of the at least one geographic region: an operating frequency band of the radio environment map parameter, an indication of whether the radio environment map parameter is valid, and a type and credibility of the radio environment map parameter. For details, refer to the foregoing related description. Details are not described herein again.

S502: The first communication apparatus performs communication based on the first information.

For example, when the radio environment map parameter includes a radio channel parameter but does not include a radio transmission parameter, the first communication apparatus may determine, based on the radio channel parameter of a geographic region in which the first communication apparatus is located, the radio channel transmission parameter associated with the radio channel parameter, and perform uplink and downlink transmission based on the radio channel transmission parameter. Alternatively, when the radio environment map parameter includes the radio transmission parameter, the first communication apparatus may directly use the radio transmission parameter of the geographic region in which the first communication apparatus is located to perform uplink and downlink transmission. In this case, the radio environment map parameter may include the radio channel parameter, or may not include the radio channel parameter. In addition, the first communication apparatus may select, based on an available frequency band of the first communication apparatus, an effective radio environment map parameter corresponding to the frequency band to perform communication.

In a possible implementation, as shown in FIG. 5B, in step S501, that the first communication apparatus obtains the first information may include the following steps S5011 and S5012.

S5011: The first communication apparatus sends second information to a second communication apparatus. Correspondingly, the second communication apparatus receives the second information from the first communication apparatus.

The second information is used to request the radio environment map parameter of the at least one geographic region. For example, the second information may be used to request to download the radio environment map parameter of the at least one geographic region for an initial time, or may be used to request to update and download the radio environment map parameter of the at least one geographic region.

Optionally, that the second information is used to request the radio environment map parameter of the at least one geographic region may also be understood as that the second information is used to request a part or all of information in an information set of the at least one geographic region. For the information set of the geographic region, refer to the foregoing related description. Details are not described herein again.

In a first possible implementation, when the first communication apparatus is the RAN node, the second communication apparatus may be a central node. The central node may be deployed in an access network or a core network, and this is not limited.

In the first possible implementation, the second information may include an identifier of a first cell managed by the RAN node, and the first cell may be one or more cells. In this case, the at least one geographic region is a geographic region in the first cell. For example, after receiving the identifier of the first cell, the second communication apparatus may learn coverage of the first cell based on the identifier of the first cell, to determine a geographic region within the coverage of the first cell as the at least one geographic region.

Further, the second information may further include the operating frequency band of the requested radio environment map parameter, the requested radio channel parameter, and the requested radio transmission parameter.

For example, the requested radio channel parameter/radio transmission parameter may also be understood as a type of the requested radio channel parameter/a type of the requested radio transmission parameter. Requested radio channel parameters may be a universal set of radio channel parameters or a subset of the universal set, and requested radio transmission parameters may be a universal set of radio transmission parameters or a subset of the universal set.

In the first possible implementation, when the second communication apparatus is deployed in the radio access network, the first communication apparatus may send the second information to the second communication apparatus through an Xn interface. When the second communication apparatus is deployed in the core network, the first communication apparatus may send the second information to the second communication apparatus through a service-based interface between the first communication apparatus and the second communication apparatus.

In the first possible implementation, the central node may maintain information sets of a plurality of geographic regions, and the information sets of the geographic regions maintained by the central node may be determined by the central node. For a determining manner, refer to the foregoing related description. Details are not described herein again.

In a second possible implementation, when the first communication apparatus is the terminal, the second communication apparatus may be the RAN node. For example, the second communication apparatus is a current serving RAN node of the terminal, or the second communication apparatus is a RAN node that is currently providing a service for the terminal.

In the second possible implementation, the second information may include at least one of the following: location information of the terminal, information indicating a first range, or an identifier of the at least one geographic region. The location information of the terminal may refer to current location information of the terminal. Further, the second information may further include the operating frequency band of the requested radio environment map parameter, the requested radio channel parameter, and the requested radio transmission parameter. Refer to related descriptions in the first possible implementation.

When the second information includes the location information of the terminal, the at least one geographic region includes a geographic region to which a location indicated by the location information of the terminal belongs.

When the second information includes the information indicating the first range, the at least one geographic region is a geographic region in the first range, and the geographic region in the first range may include a geographic region in which the terminal is currently located, or may not include the geographic region in which the terminal is currently located. For example, when the terminal can predict a moving path of the terminal, the first range indicated by the terminal may include a geographic region in which the terminal may be located in the future.

For example, the information indicating the first range may be a geographic radius. After receiving the information, the second communication apparatus may determine the first range based on the geographic radius. For example, the first range is a circular region that uses a location (for example, the location of the terminal) as a center and uses the geographic radius as a radius.

When the second information includes the identifier of the at least one geographic region, the second information may include an identifier of the geographic region in which the terminal is currently located, or the identifier of the geographic region and an identifier of a surrounding geographic region of the geographic region; or the second information may include an identifier of the geographic region in which the terminal may be located in the future, or the identifier of the geographic region and an identifier of a surrounding geographic region of the geographic region.

In the second possible implementation, the second information may be carried in radio resource control (radio resource control, RRC) signaling, media access control (media access control, MAC) signaling, or physical layer signaling.

In the second possible implementation, an information set of a geographic region maintained by the RAN node may be determined by the RAN node. For a determining manner, refer to the foregoing related description. Details are not described herein again. Alternatively, the information set may be requested by the RAN node from a central node, and this is not limited.

S5012: The second communication apparatus sends the first information to the first communication apparatus. Correspondingly, the first communication apparatus receives the first information from the second communication apparatus.

In a possible implementation, the second communication apparatus may send, to the first communication apparatus based on the first information, an information set of a part or all of geographic regions requested by the first communication apparatus. The information set includes a radio environment map parameter, and may further include at least one of an operating frequency band of the radio environment map parameter, an indication of whether the radio environment map parameter is valid, a type of the radio environment map parameter, and credibility of the radio environment map parameter.

For example, in an example in which the second information is used to request radio environment map parameters of a geographic region 1, a geographic region 2, and a geographic region 3, the second communication apparatus may send, to the first communication apparatus, an information set of one or more geographic regions of the geographic region 1, the geographic region 2, and the geographic region 3.

In a possible implementation, when the first communication apparatus is the terminal, after the terminal receives the first information, effective time of the first information is as follows.

In a possible implementation, the effective time of content included in the first information may be indicated by the RAN node. For example, after sending the first information, the RAN node may send indication information. The indication information indicates the effective time of the first information. For example, the indication information includes a time offset, and the effective time of the first information is time after the time offset. Alternatively, the indication information is used to activate the first information, or is used to trigger the first information to take effect, that is, the first information takes effect after the indication information is received. The indication information may be carried in layer 1 signaling or layer 2 signaling.

In another possible implementation, after the terminal receives the first information, the first information immediately takes effect, that is, time at which the first information takes effect may be time at which the terminal receives the first information. Alternatively, the effective time of the first information may be determined by the terminal.

In a possible implementation, before sending the first information, the second communication apparatus may further notify the first communication apparatus whether the second communication apparatus supports compression when sending the first information. If compression is supported, a compression manner may be further sent to the first communication apparatus, so that the first communication apparatus performs corresponding decompression.

For example, in a CU-DU architecture or an ORAN system, when the first communication apparatus is the RAN node and the second communication apparatus is the central node, actions of the first communication apparatus in steps S5011 and S5012 may be performed by a CU or an O-CU. When the first communication apparatus is the terminal and the second communication apparatus is the RAN node, actions of the second communication apparatus in steps S5011 and S5012 may be performed by a DU or an O-DU.

Based on the foregoing solution, the terminal or the RAN node can pre-obtain the radio channel parameter and/or the radio transmission parameter of the at least one geographic region. When communication is subsequently performed in a geographic region, a pre-obtained radio channel parameter and/or radio transmission parameter of the geographic region may be directly searched for, to perform communication based on the parameter(s). In comparison with a conventional method in which a radio channel parameter and a radio transmission parameter are obtained completely through pilot measurement, this method can reduce pilot overheads of a system, reduce power consumption of the terminal and the RAN node caused by the pilot measurement, and facilitate energy saving of the terminal and the RAN node. In addition, when the radio transmission parameter of the geographic region is pre-obtained, the RAN node does not need to determine the radio transmission parameter, and does not need to indicate the radio transmission parameter to the terminal through signaling, so that processing complexity of the RAN node can be simplified, and signaling overheads can be further reduced.

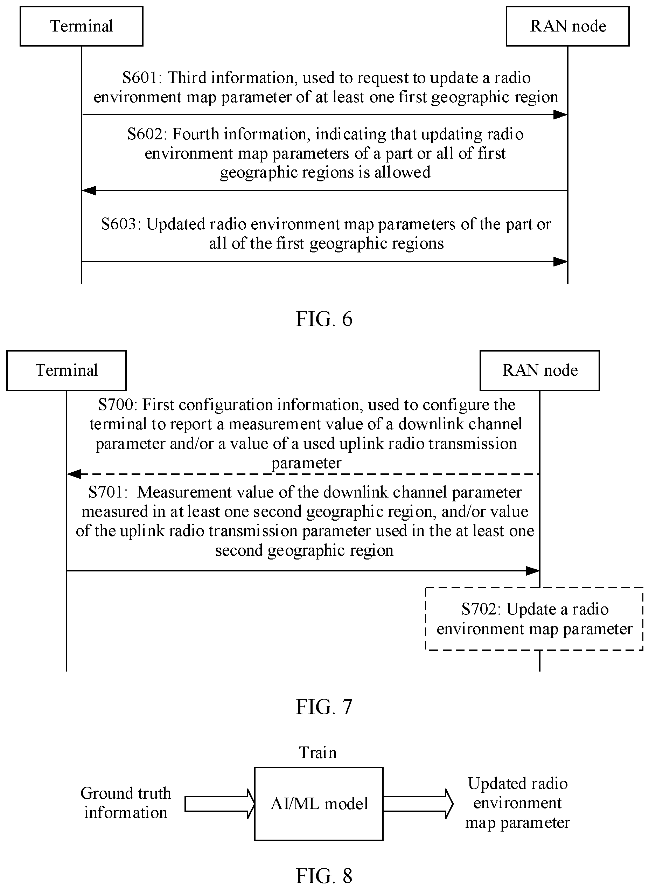

This application further provides a communication method. In the method, after obtaining a radio environment map parameter of at least one geographic region, a terminal may update the radio environment map parameter. As shown in FIG. 6, the communication method may include the following steps.

S601: The terminal sends third information to a RAN node. Correspondingly, the RAN node receives the third information from the terminal.

The third information is used to request to update the radio environment map parameter of the at least one first geographic region. A first geographic region may be understood as a geographic region that is in the at least one geographic region and whose radio environment map parameter needs to be updated.

In a possible implementation, the third information may include at least one of the following: location information of the terminal, information indicating a second range, an identifier of the at least one first geographic region, an operating frequency band of the radio environment map parameter requested to be updated, a radio channel parameter requested to be updated, and a radio transmission parameter requested to be updated.

For example, the location information of the terminal may be current location information of the terminal. The information indicating the second range may be used to determine the at least one first geographic region, for example, the at least one first geographic region is a geographic region in the second range. For the information indicating the second range, refer to related descriptions of the information indicating the first range in step S5011. Details are not described herein again.

For example, the radio channel parameter/radio transmission parameter requested to be updated may also be understood as a type of the radio channel parameter/a type of the radio transmission parameter requested to be updated. Radio channel parameters that request to be updated may be a universal set of radio channel parameters or a subset of the universal set, and radio transmission parameters that request to be updated may be a universal set of radio transmission parameters or a subset of the universal set.

In a possible implementation, the third information is used to request to update the radio environment map parameter of the at least one first geographic region, or may be understood as that the third information is used to request to correct/upload/load/report the radio environment map parameter of the at least one first geographic region.

In a possible implementation, after receiving the third information, the RAN node may determine whether to allow the terminal to update the radio environment map parameter of the at least one first geographic region, or determine the first geographic region in which updating the radio environment map parameter is allowed. If the RAN node does not allow updating a radio environment map parameter of any first geographic region, the procedure ends, or the RAN node sends, to the terminal, information indicating that updating the radio environment map parameter is not allowed. If the RAN node allows updating radio environment map parameters of a part or all of first geographic regions in the at least one first geographic region, the following steps S602 and S603 are performed.

S602: The RAN node sends fourth information to the terminal. Correspondingly, the terminal receives the fourth information from the RAN node.

The fourth information indicates that updating the radio environment map parameters of the part or all of the first geographic regions in the at least one first geographic region is allowed. The fourth information may explicitly or implicitly indicate that updating the radio environment map parameters of the part or all of the first geographic regions is allowed. For example, the following three implementations may exist.

Manner 1: The fourth information indicates a first resource. The first resource is used to carry the updated radio environment map parameters of the part or all of the first geographic regions.

For example, the fourth information may include time domain location information (for example, a time domain start location and a quantity of occupied time domain symbols), frequency domain location information (for example, a frequency domain start location), space domain resource information (for example, an antenna port (port)), and the like of the first resource.

Manner 2: The fourth information is used to activate the first resource. The first resource is used to carry the updated radio environment map parameters of the part or all of the first geographic regions.

In Manner 2, the first resource may be preconfigured or semi-statically configured by the RAN node. After the terminal receives the fourth information, the first resource is activated, that is, the first resource takes effect or is available.

In Manner 1 and Manner 2, it may be considered that the fourth information implicitly indicates that updating the radio environment map parameters of the part or all of the first geographic regions is allowed.

Manner 3: The fourth information indicates, based on 1 bit whose value is a first value, updating the radio environment map parameters of the part or all of the first geographic regions is allowed.

For example, the 1 bit may be defined to indicate whether updating the radio environment map parameters of the part or all of the first geographic regions is allowed. When the value of the 1 bit is the first value, the 1 bit indicates the fourth information, and indicates that the update is allowed. When the value of the 1 bit is a second value, the 1 bit may indicate that the update is not allowed. The first value may be "1", and correspondingly, the second value is "0"; or the first value may be "0", and correspondingly, the second value is "1".

In Manner 3, the RAN node may further additionally send information indicating the first resource or indicating activation of the first resource. Refer to the description in Manner 1 or Manner 2. Details are not described herein again.

In the foregoing three manners, when the fourth information indicates that updating the radio environment map parameters of the part of the first geographic regions is allowed, the RAN node may further indicate, to the terminal, the first geographic regions that are allowed to be updated. For example, the RAN node indicates or sends identifiers of the first geographic regions to the terminal by using a bitmap.

S603: The terminal sends the updated radio environment map parameters of the part or all of the first geographic regions to the RAN node. Correspondingly, the RAN node receives the updated radio environment map parameters of the part or all of the first geographic regions from the terminal.

For example, the terminal sends, on the first resource, the updated radio environment map parameters of the first geographic regions. The RAN node receives, on the first resource, the updated radio environment map parameters of the first geographic regions from the terminal.

In a possible implementation, that the terminal updates the radio environment map parameters of the first geographic regions may include: The terminal updates values of a part or all of parameters in the radio environment map parameters of the first geographic regions. In this case, the updated radio environment map parameters of the first geographic regions include updated values of the parameters.

In another possible implementation, the terminal divides the first geographic region into a plurality of sub-regions with smaller ranges, and determines a radio environment map parameter of each sub-region. In this case, the updated radio environment map parameter of the first geographic region includes the radio environment map parameter of each sub-region of the first geographic region.

In a possible implementation, the terminal may update the radio environment map parameter of the first geographic region based on a downlink channel parameter measurement quantity measured in the first geographic region and/or an uplink radio transmission parameter used in the first geographic region.

In a possible implementation, after determining the updated radio environment map parameter of the first geographic region, the terminal uses the updated radio environment map parameter of the first geographic region to overwrite the radio environment map parameter before the update, that is, the terminal locally refreshes the radio environment map parameter of the first geographic region.

Based on the foregoing solution, the terminal can request to update the radio environment map parameter, and send the updated radio environment map parameter to the RAN node when the RAN node allows the update, so that the radio environment map parameter is closer to a ground truth, thereby improving communication performance when the radio environment map parameter is used to assist in communication.

The solution shown in FIG. 6 may be understood as that the terminal reports the updated radio environment map parameter to the RAN node. In addition, this application further provides a communication method. In the method, after obtaining a radio environment map parameter of at least one geographic region, a terminal may report, to a RAN node, information used to update or calibrate the radio environment map parameter, so that the RAN node can update or calibrate the radio environment map parameter based on the information. As shown in FIG. 7, the method includes the following steps.

S701: The terminal sends ground truth information to the RAN node. Correspondingly, the RAN node receives the ground truth information from the terminal.

The ground truth information includes a downlink channel parameter measurement quantity measured in at least one second geographic region, and/or an uplink radio transmission parameter used in the at least one second geographic region. The at least one second geographic region may be understood as a geographic region in which the terminal performs downlink channel measurement and/or uplink radio transmission in the foregoing at least one geographic region.

For example, after obtaining the radio environment map parameter of the at least one geographic region, the terminal may perform downlink channel measurement in the at least one second geographic region, to obtain the downlink channel parameter measurement quantity (or referred to as a measurement value) of the at least one second geographic region; and/or the terminal may perform uplink radio transmission in the at least one second geographic region, to obtain the used uplink radio transmission parameter (or referred to as a value of the uplink radio transmission parameter).

For example, the terminal may send RRC signaling, MAC signaling, or physical layer signaling to the RAN node, and the RRC signaling, the MAC signaling, or the physical layer signaling carries the ground truth information.

In a possible implementation, the terminal may report the ground truth information based on a configuration of the RAN node. For example, as shown in FIG. 7, before step S701, the method further includes step S700.

S700: The RAN node sends first configuration information to the terminal. Correspondingly, the terminal receives the first configuration information from the RAN node. In this scenario, in step S701, the terminal sends the ground truth information based on the first configuration information.

The first configuration information is used to configure the terminal to report the downlink channel parameter measurement quantity and/or the used uplink radio transmission parameter. For example, the first configuration information may be carried in the RRC signaling, the MAC signaling, or the physical layer signaling. The first configuration information may also be referred to as a ground truth report configuration (ground truth report configuration).

In a possible implementation, the first configuration information is used to configure at least one of the following: a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, a second resource, and the like.

The downlink reference signal resource may include time domain and frequency domain locations of a reference signal, or include the time domain and frequency domain locations of the reference signal and a port. The reference signal resource is used by the terminal to perform downlink channel measurement. To be specific, the terminal may measure the reference signal at the configured time domain and frequency domain locations, and a measurement result is the measured downlink channel parameter measurement quantity. For example, the reference signal may be a CSI-RS or a demodulation reference signal (demodulation reference signal, DMRS).

The reported downlink channel parameter may indicate a type of a reported downlink radio channel parameter, for example, a time domain channel parameter or a frequency domain channel parameter that is fed back. Further, the type (for example, a power, a delay, an AOA, an AOD, a ZOA, or a ZOD) of the time domain channel parameter that is fed back may be indicated.

The first time unit indicates reporting of a value of the uplink radio transmission parameter used for uplink transmission in the first time unit. If the first time unit is not configured in the first configuration information, in step S701, the terminal further reports a time unit corresponding to a value of the uplink radio transmission parameter, to indicate that the terminal reports the value of the uplink radio transmission parameter used for uplink transmission in the time unit.

For example, the time unit in this application may be an orthogonal frequency division multiplexing (orthogonal frequency division multiplexing, OFDM) symbol, a slot, a mini-slot, a subframe, or the like.

The reported uplink radio transmission parameter may be a type of an uplink radio transmission parameter that needs to be reported by the terminal.

The frequency domain granularity of the reported downlink channel parameter and/or the reported uplink radio transmission parameter may be a subband or a wideband. To be specific, the terminal is indicated to report a downlink channel parameter and/or an uplink radio transmission parameter on each subband or report a downlink channel parameter and/or an uplink radio transmission parameter on an entire wideband.

For example, the downlink channel parameter and/or the uplink radio transmission parameter on the wideband may be an average value of uplink/downlink channel parameters and/or uplink radio transmission parameters of all subbands on the wideband.

The reporting manner may include periodic (periodic) reporting, aperiodic (aperiodic) reporting, or semi-persistent (semi-persistent) scheduling reporting.

Whether compressed reporting is supported may refer to whether the RAN node supports compression performed by the terminal when reporting the ground truth information. If compressed reporting is supported, the first configuration information may further include the compression manner.

The second resource is used to carry the downlink channel parameter measurement quantity and/or the used uplink radio transmission parameter.

In a possible implementation, after step S701, the method further includes the following step.

S702: The RAN node updates the radio environment map parameter based on the ground truth information.

For example, updating the radio environment map parameter may also be understood as performing adjustment, or fine adjustment, or error correction on the radio environment map parameter.

For example, as shown in FIG. 8, the RAN node may use the ground truth information as a training parameter to train or finely adjust an AI or ML model, to update the radio channel parameter and/or the radio transmission parameter of the geographic region.

It should be noted that the RAN node updating the radio environment map parameter of the second geographic region based on only the ground truth information is not limited in this application, and the RAN node may alternatively update a radio environment map parameter of another geographic region based on the ground truth information. For example, in the update manner shown in FIG. 8, the RAN node trains the AI or ML model based on the ground truth information, so that the RAN node may alternatively update the radio environment map parameter of the another geographic region.

In addition, the terminal may alternatively update the radio environment map parameter based on the ground truth information. For an update manner, refer to the manner in which the RAN node updates the radio environment map parameter in step S702. This is not limited.

The methods shown in FIG. 6 and FIG. 7 may be considered as updating the radio environment map parameter based on a ground truth of the downlink channel parameter and/or the uplink radio transmission parameter. In addition, the update may also be performed based on a ground truth of an uplink channel parameter and/or a downlink radio transmission parameter.

In a possible implementation, similar to the manner shown in FIG. 6, the RAN node may obtain the ground truth of the uplink channel parameter and/or the downlink radio transmission parameter, update the radio environment map parameter based on the ground truth, and send the updated radio environment map parameter to the terminal. For a detailed implementation, refer to the method shown in FIG. 6. Details are not described herein again.

In another possible implementation, similar to the manner shown in FIG. 7, the RAN node may send the ground truth of the uplink channel parameter and/or the downlink radio transmission parameter to the terminal. After receiving the ground truth, the terminal may update the radio environment map parameter based on the ground truth. In addition, the RAN node may locally update the radio environment map parameter based on the ground truth. For a detailed implementation, refer to the method shown in FIG. 7. Details are not described herein again.

Based on this solution, the RAN node and/or the terminal can update the radio environment map parameter based on the channel parameter measurement quantity and/or the used radio transmission parameter, so that the predicted radio environment map parameter is closer to the ground truth, thereby improving communication performance when the radio environment map parameter is used to assist in communication.

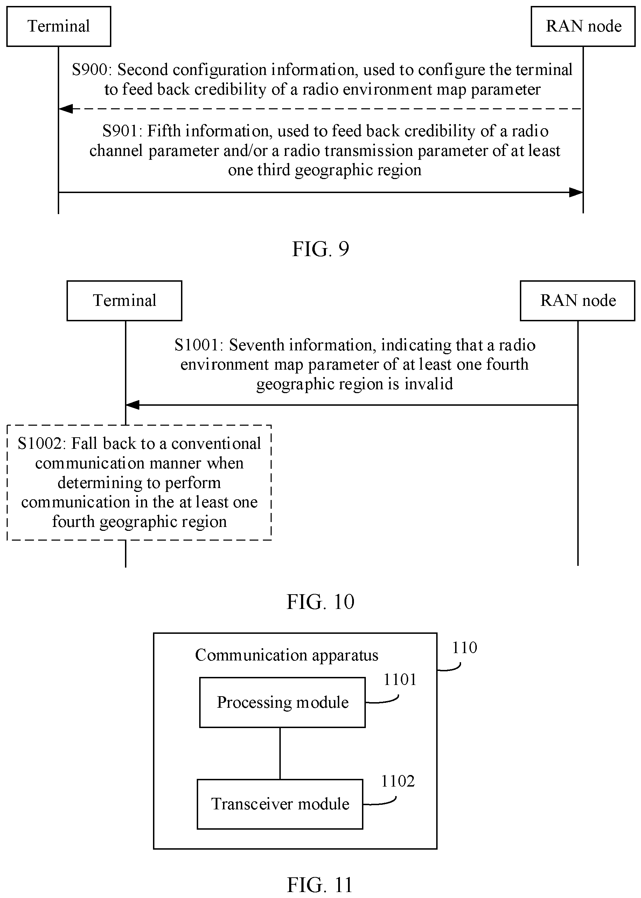

This application further provides a communication method. In the method, after obtaining a radio environment map parameter of at least one geographic region, a terminal may feed back credibility of the radio environment map parameter. As shown in FIG. 9, the communication method may include the following steps.

S901: The terminal sends fifth information to a RAN node. Correspondingly, the RAN node receives the fifth information from the terminal.

The fifth information is used to feed back credibility of a radio channel parameter and/or a radio transmission parameter of at least one third geographic region. The at least one third geographic region may be understood as a geographic region, in the foregoing at least one geographic region, in which the terminal performs communication based on a radio environment map parameter of the geographic region.

It may be understood that the terminal may feed back, to the RAN node, credibility of a part or all of radio channel parameters of the third geographic region and/or credibility of a part or all of radio transmission parameters of the third geographic region.

For example, the credibility of the radio channel parameter and/or the radio transmission parameter of the third geographic region may be evaluated based on communication performance during downlink communication performed by the terminal in the third geographic region based on the radio channel parameter and/or the radio transmission parameter.

In a possible implementation, when the fifth information is used to feed back the credibility of the radio channel parameter of the third geographic region,
in a first possible implementation, a radio channel in the third geographic region may be a multipath channel, and each path has a corresponding radio channel parameter, that is, the radio channel parameter of the third geographic region includes a radio channel parameter of at least one path. For example, the multipath channel includes *L* paths. Radio channel parameters of the third geographic region include radio channel parameters (for example, powers, delays, angles of arrival, and angles of departure) of a path 1, a path 2, ..., and a path *L*. In this case, the fifth information may be used to feed back credibility of a radio channel parameter of each first path in the third geographic region. The first path is a path or a component in the multipath channel. The radio environment map parameter used by the terminal includes the radio channel parameter of the first path.

For example, *L* is equal to 3. If the radio environment map parameters used by the terminal during communication include the radio channel parameters of the path 1 and the path 2, the fifth information is used to feed back credibility of the radio channel parameters of the path 1 and the path 2.

For example, the terminal may perform feedback based on a sequence of received radio channel parameters of the multipath channel. For example, if the radio channel parameters of the third geographic region received by the terminal are {radio channel parameter of the path 1, radio channel parameter of the path 2, radio channel parameter of the path 3}, the fifth information may include {credibility of the radio channel parameter of the path 1, credibility of the radio channel parameter of the path 2, N.A}. N.A indicates that the radio channel parameter of the path 3 is not used.

The credibility of the radio channel parameter of the path 1 and the credibility of the radio channel parameter of the path 2 may be indicated based on a value of at least 1 bit. For example, if the credibility is classified into high and low, the fifth information may include {1/0, 1/0, N.A}. 1 and 0 respectively indicate that the credibility of the radio channel parameter of the path is high and low. It may be understood that, if the credibility is classified into more than two levels, the credibility of the radio channel parameter may be indicated based on values of at least 2 bits.

Alternatively, the terminal may carry correspondences between path identifiers and credibility of the path identifiers in the fifth information, for example, carry {path 1, credibility 1} and {path 2, credibility 2}. A specific format of the fifth information is not limited in this application.

Optionally, when the radio channel parameters include a plurality of parameters (for example, including the power, the delay, the angle of arrival, and the angle of departure), the terminal may use a part or all of the plurality of parameters during communication. In this scenario, based on the fifth information, the terminal may further send sixth information to the RAN node. Correspondingly, the RAN node receives the sixth information from the terminal.

The sixth information is used to feed back credibility of each first radio channel parameter of the first path. The first radio channel parameter is a parameter of the first path used by the terminal, or the radio environment map parameter used by the terminal during communication includes the first radio channel parameter of the first path. For a feedback manner of the credibility of the first radio channel parameter, refer to the foregoing feedback manner of the credibility of the radio channel parameter of the first path. Details are not described herein again.

In a second possible implementation, the radio channel parameter of the third geographic region may include a radio channel parameter of at least one frequency domain subband, and the fifth information may be used to feed back credibility of a radio channel parameter of each first frequency domain subband. The radio environment map parameter used by the terminal includes the radio channel parameter of the first frequency domain subband. For a feedback manner of the credibility of the frequency domain subband, refer to the foregoing feedback manner of the credibility of the radio channel parameter of the first path. Details are not described herein again.

In a possible implementation, when the fifth information is used to feed back the credibility of the radio transmission parameter of the third geographic region, the fifth information may be used to feed back credibility of each first radio transmission parameter of the third geographic region. The first radio transmission parameter is a radio transmission parameter used by the terminal.

For example, the terminal may perform feedback based on a sequence of received radio transmission parameters. For example, the radio transmission parameters of the third geographic region include {uplink MCS, uplink transmit power, uplink TA, PMI, beam indicator}. If radio transmission parameters used by the terminal are the uplink MCS, the uplink transmit power, and the uplink TA, the fifth information may include {credibility of the uplink MCS, credibility of the uplink transmit power, credibility of the uplink TA, N.A, N.A}. N.A and N.A indicate that the PMI and the beam indicator are not used.

Alternatively, the terminal may carry correspondences between names of radio transmission parameters and credibility of the radio transmission parameters in the fifth information, for example, carry {uplink MCS, credibility A}, {uplink transmit power, credibility B}, and {uplink TA, credibility C}.

In a possible implementation, the terminal may feed back the credibility of the radio environment map parameter based on a configuration of the RAN node. For example, as shown in FIG. 9, before step S901, the method further includes step S900.

S900: The RAN node sends second configuration information to the terminal. Correspondingly, the terminal receives the second configuration information from the RAN node. In this scenario, in step S901, the terminal sends the fifth information based on the second configuration information.

The second configuration information is used to configure the terminal to feed back the credibility of the radio environment map parameter. For example, the second configuration information may be carried in RRC signaling, MAC signaling, or physical layer signaling. The second configuration information may also be referred to as a credibility feedback configuration (credibility feedback configuration).

In a possible implementation, the second configuration information is used to configure at least one of the following: a radio channel parameter whose credibility needs to be fed back, a radio transmission parameter whose credibility needs to be fed back, the feedback manner, a frequency band of the radio channel parameter and/or the radio transmission parameter that needs to be fed back, a third resource, and the like.

The radio channel parameter whose credibility needs to be fed back may indicate a type of the radio channel parameter whose credibility needs to be fed back. The radio transmission parameter whose credibility needs to be fed back may indicate a type of the radio transmission parameter whose credibility needs to be fed back.

The feedback manner may include periodic (periodic) feedback, aperiodic (aperiodic) feedback, or semi-persistent (semi-persistent) scheduling feedback.

The third resource is used to carry the credibility of the radio environment map parameter.

In a possible implementation, after step S901, the RAN node may update an information set of the geographic region based on the fifth information. For example, if credibility of a radio environment map parameter of the third geographic region fed back by the terminal is high, the RAN node may set the credibility of the radio environment map parameter to high, and continue to maintain an information set of the third geographic region. If the credibility of the radio environment map parameter of the third geographic region fed back by the terminal is low, the RAN node may trigger correction, for example, configure the terminal to report ground truth information, to correct or update the radio environment map parameter, or the RAN node may delete a parameter with low credibility.

In addition, the RAN node may further evaluate, based on communication performance during downlink communication performed based on a radio environment map parameter, credibility of the radio environment map parameter, and update an information set of the geographic region based on the credibility. Then, the RAN node may further send an updated information set of the geographic region to the terminal.

Based on this solution, the terminal or the RAN node can evaluate the credibility of the radio environment map parameter in time. In this way, related processing can be performed based on the credibility, for example, correction or update of the parameter with low credibility is triggered, or the parameter with low credibility is deleted, or a parameter with high credibility is continued to be maintained, to ensure that a radio environment map parameter with high credibility or close to a ground truth can be used in subsequent communication, thereby improving the communication performance.

This application further provides a communication method. In the method, after a RAN node sends a radio environment map parameter of at least one geographic region to a terminal, a radio environment map parameter of at least one geographic region or radio environment map parameters of a part of geographic regions may be invalid. As shown in FIG. 10, the communication method may include the following steps.

S1001: The RAN node sends seventh information to the terminal. Correspondingly, the terminal receives the seventh information from the RAN node.

The seventh information indicates that a radio environment map parameter of at least one fourth geographic region is invalid. The at least one fourth geographic region is a region in the foregoing at least one geographic region. For example, the RAN node may send the seventh information when credibility of the radio environment map parameter of the fourth geographic region is low, or accuracy is reduced and communication cannot be assisted, or the radio environment map parameter of the fourth geographic region cannot be corrected or updated.

For example, the seventh information may be carried in RRC signaling, MAC signaling, or physical layer signaling. The seventh information may be implemented by setting an indication of whether an information set of the geographic region is valid to off.

Optionally, whether the radio environment map parameter is valid may be set by using the terminal as a granularity. For example, a radio environment map parameter may be invalid for a terminal, but valid for another terminal.

Alternatively, whether the radio environment map parameter is valid is unified for all terminals under the RAN node. For example, a radio environment map parameter may be invalid or valid for all the terminals under the RAN node. In this case, after determining that the radio environment map parameter of the fourth geographic region is invalid, the RAN node may delete the locally maintained radio environment map parameter of the fourth geographic region or an information set of the fourth geographic region.

In a possible implementation, after receiving the seventh information, the terminal may further perform the following step S1002.

S1002: The terminal falls back to a conventional communication manner when determining to perform communication in the at least one fourth geographic region. In other words, communication is performed in the fourth geographic region in the conventional communication manner.

For example, the conventional communication manner may be understood as that during communication, channel measurement needs to be performed, and then communication is performed based on a channel measurement result.

Based on this solution, the RAN node may indicate, to the terminal, that the radio environment map is invalid, to avoid deterioration of communication performance caused by the terminal performing communication based on an invalid radio environment map or a radio environment map with low credibility.

It should be noted that the foregoing various communication methods may be performed independently of each other, or may be combined with each other to form a new communication method. This is not specifically limited in this application.

In a possible implementation, for the methods shown in FIG. 6 to FIG. 10, in a CU-DU architecture or an ORAN system, a function of interaction between a RAN node and a terminal may be implemented by a DU or an O-DU. Information sent by the RAN node to the terminal may be generated by the DU or the O-DU, or may be generated by a CU or an O-CU and sent to the DU or the O-DU. A processing function of the RAN node may be implemented by the CU or the O-CU, or may be implemented by the DU or the O-DU, or may be jointly implemented by the CU and the DU (or the O-CU and the O-DU). This is not limited.

The foregoing describes the methods provided in this application. In addition, this application further provides a communication apparatus to implement the functions described in the foregoing method embodiments.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 11 is a diagram of a structure of a communication apparatus 110. The communication apparatus 110 includes a processing module 1101 and a transceiver module 1102. The communication apparatus 110 may be configured to implement a function of the terminal or the RAN node.

In some embodiments, the communication apparatus 110 may further include a storage module (not shown in FIG. 11), configured to store program instructions and data.

In some embodiments, the transceiver module 1102 may also be referred to as a transceiver unit, and is configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module, respectively configured to perform receiving steps and sending steps performed by the terminal or the RAN node in the method embodiments, and/or configured to support another process of the technology described in this specification. The processing module 1101 may be configured to perform processing steps performed by the terminal or the RAN node in the method embodiments, and/or configured to support another process of the technology described in this specification.

When the communication apparatus 110 is configured to implement the function of the terminal or the RAN node,
the processing module 1101 is configured to obtain first information, where the first information includes information about at least one geographic region and a radio environment map parameter of the at least one geographic region, the radio environment map parameter includes a radio channel parameter and/or a radio transmission parameter associated with the radio channel parameter, and the first information further includes at least one of the following: an operating frequency band of the radio environment map parameter, an indication of whether the radio environment map parameter is valid, and a type of the radio environment map parameter, where the type of the radio environment map parameter indicates whether the radio environment map parameter is a ground truth; and the transceiver module 1102 is configured to perform communication based on the first information.

Optionally, that the processing module 1101 is configured to obtain the first information includes: The processing module 1101 is configured to send second information via the transceiver module 1102. The second information is used to request the radio environment map parameter of the at least one geographic region. The processing module 1101 is further configured to receive the first information via the transceiver module 1102.

When the communication apparatus 110 is configured to implement the function of the terminal,
optionally, the transceiver module 1102 is further configured to send third information, where the third information is used to request to update a radio environment map parameter of at least one first geographic region; the transceiver module 1102 is further configured to receive fourth information, where the fourth information indicates that updating radio environment map parameters of a part or all of first geographic regions in the at least one first geographic region is allowed; and the transceiver module 1102 is further configured to send the updated radio environment map parameters of the part or all of the first geographic regions.

Optionally, the transceiver module 1102 is further configured to send a downlink channel parameter measurement quantity measured in at least one second geographic region, and/or an uplink radio transmission parameter used in the at least one second geographic region.

Optionally, the transceiver module 1102 is specifically configured to: receive first configuration information, where the first configuration information is used to configure the terminal to report the downlink channel parameter measurement quantity and/or the used uplink radio transmission parameter; and send, based on the first configuration information, the downlink channel parameter measurement quantity measured in the at least one second geographic region and/or the uplink radio transmission parameter used in the at least one second geographic region.

Optionally, the transceiver module 1102 is further configured to send fifth information. The fifth information is used to feed back credibility of a radio channel parameter and/or a radio transmission parameter of at least one third geographic region.

Optionally, when the fifth information is used to feed back the credibility of the radio channel parameter of each first path in the third geographic region, the transceiver module 1102 is further configured to send sixth information. The sixth information is used to feed back credibility of each first radio channel parameter of each first path.

Optionally, the transceiver module 1102 is further configured to receive seventh information. The seventh information indicates that a radio environment map parameter of at least one fourth geographic region is invalid.

Optionally, the processing module 1101 is further configured to: when it is determined to perform communication in the at least one fourth geographic region, perform channel measurement, and then perform communication based on a channel measurement result.

When the communication apparatus 110 is configured to implement the function of the RAN node,
optionally, the transceiver module 1102 is further configured to receive third information, where the third information is used to request to update a radio environment map parameter of at least one first geographic region; the transceiver module 1102 is further configured to send fourth information, where the fourth information indicates that updating radio environment map parameters of a part or all of first geographic regions in the at least one first geographic region is allowed; and the transceiver module 1102 is further configured to receive the updated radio environment map parameters of the part or all of the first geographic regions.

Optionally, the transceiver module 1102 is further configured to receive a downlink channel parameter measurement quantity measured in at least one second geographic region, and/or an uplink radio transmission parameter used in the at least one second geographic region.

Optionally, the transceiver module 1102 is further configured to send first configuration information. The first configuration information is used to configure the terminal to report the downlink channel parameter measurement quantity and/or the used uplink radio transmission parameter.

Optionally, the transceiver module 1102 is further configured to receive fifth information. The fifth information is used to feed back credibility of a radio channel parameter and/or a radio transmission parameter of at least one third geographic region.

Optionally, when the fifth information is used to feed back credibility of a radio channel parameter of each first path in the third geographic region, the transceiver module 1102 is further configured to receive sixth information. The sixth information is used to feed back credibility of each first radio channel parameter of each first path.

Optionally, the transceiver module 1102 is further configured to receive seventh information. The seventh information indicates that a radio environment map parameter of at least one fourth geographic region is invalid.

All related content of the steps in the foregoing method embodiments may be cited in function descriptions of the corresponding functional modules. Details are not described herein again.

In this application, the communication apparatus 110 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 110 in FIG. 11 is a chip or a chip system, a function/implementation process of the transceiver module 1102 may be implemented through an input/output interface (or a communication interface) of the chip or the chip system, and a function/implementation process of the processing module 1101 may be implemented via a processor (or a processing circuit) of the chip or the chip system.

The communication apparatus 110 provided in this embodiment may perform the foregoing methods. Therefore, for technical effect that can be achieved by the communication apparatus 110, refer to the foregoing method embodiments. Details are not described herein again.

In a possible product form, a terminal or a RAN node in embodiments of this application may be implemented by using the following: one or more field-programmable gate arrays (field-programmable gate array, FPGA), a programmable logic device (programmable logic device, PLD), a controller, a state machine, gate logic, a discrete hardware component, any other suitable circuit, or any combination of circuits that can perform various functions described throughout this application.

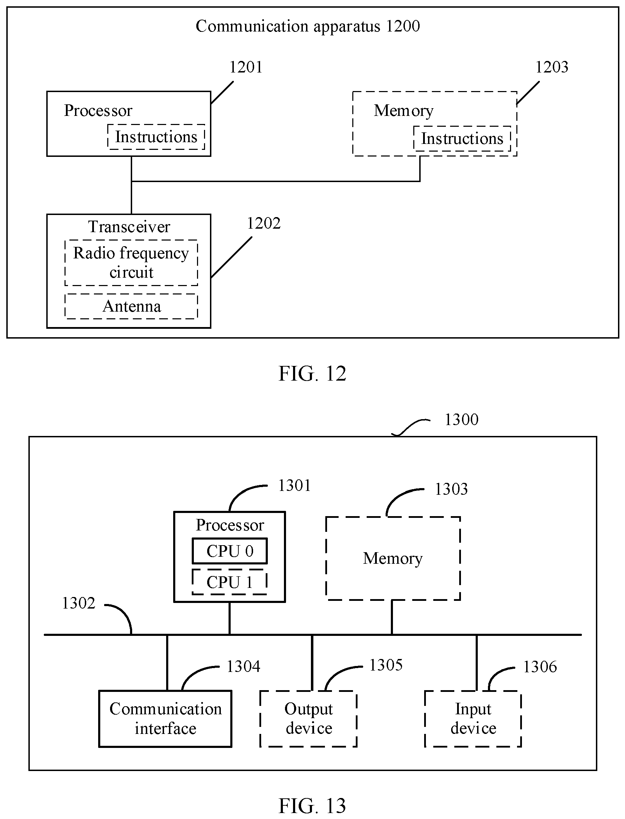

In another possible product form, the terminal or the RAN node in embodiments of this application may be implemented by using a general bus architecture. For ease of description, FIG. 12 is a diagram of a structure of a communication apparatus 1200 according to an embodiment of this application. The communication apparatus 1200 includes a processor 1201 and a transceiver 1202. The communication apparatus 1200 may be a terminal, or a chip or a chip system in the terminal. Alternatively, the communication apparatus 1200 may be a RAN node, or a chip or a module in the RAN node. FIG. 12 shows only main components of the communication apparatus 1200. In addition to the processor 1201 and the transceiver 1202, the communication apparatus may further include a memory 1203 and an input/output apparatus (not shown in the figure).

Optionally, the processor 1201 is mainly configured to: process a communication protocol and communication data, control the entire communication apparatus, execute a software program, and process data of the software program, to implement the method provided in the method embodiments. The memory 1203 is mainly configured to store the software program and data. The transceiver 1202 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1201, the transceiver 1202, and the memory 1203 may be connected through a communication bus.

After the communication apparatus is powered on, the processor 1201 may read the software program in the memory 1203, execute instructions of the software program, and process the data of the software program. When data needs to be sent wirelessly, the processor 1201 performs baseband processing on the to-be-sent data, and then outputs a baseband signal to a radio frequency circuit. The radio frequency circuit performs radio frequency processing on the baseband signal, and then sends out a radio frequency signal through the antenna in the form of an electromagnetic wave. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in hardware implementation, a person skilled in the art may figure out that the communication apparatus 110 may be in a form of the communication apparatus 1200 shown in FIG. 12.

In an example, a function/implementation process of the processing module 1101 in FIG. 11 may be implemented by the processor 1201 in the communication apparatus 1200 shown in FIG. 12 by invoking computer-executable instructions stored in the memory 1203. A function/implementation process of the transceiver module 1102 in FIG. 11 may be implemented by the transceiver 1202 in the communication apparatus 1200 shown in FIG. 12.

In another possible product form, the terminal or the RAN node in this application may use a composition structure shown in FIG. 13, or include components shown in FIG. 13. FIG. 13 is a diagram of composition of a communication apparatus 1300 according to this application. The communication apparatus 1300 may be a terminal, or a chip or a system on chip in the terminal; or may be a RAN node, or a module, a chip, or a system on chip in the RAN node.

As shown in FIG. 13, the communication apparatus 1300 includes at least one processor 1301 and at least one communication interface (in FIG. 13, only an example in which one communication interface 1304 and one processor 1301 are included is used for description). Optionally, the communication apparatus 1300 may further include a communication bus 1302 and a memory 1303.

The processor 1301 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 1301 may be another apparatus having a processing function, for example, a circuit, a component, or a software module. This is not limited.

The communication bus 1302 is configured to connect different components in the communication apparatus 1300, so that the different components can communicate with each other. The communication bus 1302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 13, but this does not mean that there is only one bus or only one type of bus.

The communication interface 1304 is configured to communicate with another device or a communication network. For example, the communication interface 1304 may be a module, a circuit, a transceiver, or any apparatus that can implement communication. Optionally, the communication interface 1304 may alternatively be an input/output interface located in the processor 1301, and is configured to implement a signal input and a signal output of the processor.

The memory 1303 may be an apparatus having a storage function, and is configured to store instructions and/or data. The instructions may be computer programs.

For example, the memory 1303 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1303 may be independent of the processor 1301, or may be integrated with the processor 1301. The memory 1303 may be located inside the communication apparatus 1300, or may be located outside the communication apparatus 1300. This is not limited. The processor 1301 may be configured to execute the instructions stored in the memory 1303, to implement a method provided in the following embodiments of this application.

In an optional implementation, the communication apparatus 1300 may further include an output device 1305 and an input device 1306. The output device 1305 communicates with the processor 1301, and may display information in a plurality of manners. For example, the output device 1305 may be a liquid crystal display (liquid crystal display, LCD), a light-emitting diode (light-emitting diode, LED) display device, a cathode ray tube (cathode ray tube, CRT) display device, or a projector (projector). The input device 1306 communicates with the processor 1301, and may receive an input of a user in a plurality of manners. For example, the input device 1306 may be a mouse, a keyboard, a touchscreen device, or a sensing device.

In some embodiments, in hardware implementation, a person skilled in the art may figure out that the communication apparatus 110 shown in FIG. 11 may be in a form of the communication apparatus 1300 shown in FIG. 13.

In an example, a function/implementation process of the processing module 1101 in FIG. 11 may be implemented by the processor 1301 in the communication apparatus 1300 shown in FIG. 13 by invoking computer-executable instructions stored in the memory 1303. The function/implementation process of the transceiver module 1102 in FIG. 11 may be implemented through the communication interface 1304 in the communication apparatus 1300 shown in FIG. 13.

It should be noted that the structure shown in FIG. 13 does not constitute a specific limitation on the terminal or the RAN node. For example, in some other embodiments of this application, the terminal or the RAN node may include more or fewer components than those shown in the figure, some components may be combined, or some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiments. Certainly, the communication apparatus may not include the memory.

In another possible implementation, the communication apparatus further includes an interface circuit. The interface circuit is a code/data read/write interface circuit, and the interface circuit is configured to: receive computer-executable instructions (where the computer-executable instructions are stored in the memory, and may be directly read from the memory, or may be read via another component), and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer programs or instructions are executed by a computer, functions in any foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, this is, may be located in one position, or may be distributed on a plurality of network units. Parts displayed as units may be or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

A part or all of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
obtaining first information, wherein the first information comprises information about at least one geographic region and a radio environment map parameter of the at least one geographic region, the radio environment map parameter comprises a radio channel parameter and/or a radio transmission parameter associated with the radio channel parameter, and the first information further comprises at least one of the following: an operating frequency band of the radio environment map parameter, an indication of whether the radio environment map parameter is valid, and a type of the radio environment map parameter, wherein the type of the radio environment map parameter indicates whether the radio environment map parameter is a ground truth; and
performing communication based on the first information.

2. The method according to claim 1, wherein the first information further comprises credibility of the radio environment map parameter.

3. The method according to claim 1 or 2, wherein the radio channel parameter comprises at least one of the following: a channel multipath power, a channel multipath delay, a channel multipath azimuth angle of arrival, a channel multipath azimuth angle of departure, a channel multipath zenith angle of arrival, a channel multipath zenith angle of departure, or a frequency domain channel response on at least one frequency domain bandwidth.

4. The method according to any one of claims 1 to 3, wherein the radio transmission parameter comprises at least one of the following: a modulation and coding scheme MCS, an uplink transmit power, an uplink timing advance TA, a precoding matrix indicator PMI, a beam indicator, and a reference signal received power.

5. The method according to any one of claims 1 to 4, wherein the type of the radio environment map parameter comprises the ground truth or a predicted value.

6. The method according to any one of claims 1 to 5, wherein the obtaining the first information comprises:
sending second information, wherein the second information is used to request the radio environment map parameter of the at least one geographic region; and
receiving the first information.

7. The method according to claim 6, wherein the second information comprises at least one of the following: location information of a terminal, information indicating a first range, and an identifier of the at least one geographic region, wherein the at least one geographic region is a geographic region in the first range.

8. The method according to claim 6 or 7, wherein the second information comprises at least one of the following: the operating frequency band of the requested radio environment map parameter, the requested radio channel parameter, and the requested radio transmission parameter.

9. The method according to any one of claims 1 to 8, wherein the at least one geographic region comprises at least one first geographic region, and the method further comprises:
sending third information, wherein the third information is used to request to update a radio environment map parameter of the at least one first geographic region;
receiving fourth information, wherein the fourth information indicates that updating radio environment map parameters of a part or all of first geographic regions in the at least one first geographic region is allowed; and
sending the updated radio environment map parameters of the part or all of the first geographic regions.

10. The method according to claim 9, wherein the third information comprises at least one of the following: the location information of the terminal, information indicating a second range, an identifier of the at least one first geographic region, the operating frequency band of the radio environment map parameter requested to be updated, the radio channel parameter requested to be updated, and the radio transmission parameter requested to be updated; and the at least one first geographic region is a geographic region in the second range.

11. The method according to any one of claims 1 to 10, wherein the at least one geographic region comprises at least one second geographic region, and the method further comprises:
sending a downlink channel parameter measurement quantity measured in the at least one second geographic region, and/or an uplink radio transmission parameter used in the at least one second geographic region.

12. The method according to claim 11, wherein the sending the downlink channel parameter measurement quantity measured in the at least one second geographic region, and/or the uplink radio transmission parameter used in the at least one second geographic region comprises:
receiving first configuration information, wherein the first configuration information is used to configure the terminal to report the downlink channel parameter measurement quantity and/or the used uplink radio transmission parameter; and
sending, based on the first configuration information, the downlink channel parameter measurement quantity measured in the at least one second geographic region and/or the uplink radio transmission parameter used in the at least one second geographic region.

13. The method according to claim 12, wherein that the first configuration information is used to configure the terminal to report the downlink channel parameter measurement quantity and/or the used uplink radio transmission parameter comprises: the first configuration information is used to configure at least one of the following:
a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource, wherein
the downlink reference signal resource is used by the terminal to perform downlink channel measurement;
the first time unit indicates reporting of a value of the uplink radio transmission parameter used for uplink transmission in the first time unit;
the reporting manner comprises periodic reporting, aperiodic reporting, or semi-persistent scheduling reporting; and
the second resource is used to carry the downlink channel parameter measurement quantity and/or the used uplink radio transmission parameter.

14. The method according to any one of claims 1 to 13, wherein the at least one geographic region comprises at least one third geographic region, and the method further comprises:
sending fifth information, wherein the fifth information is used to feed back credibility of a radio channel parameter and/or a radio transmission parameter of the at least one third geographic region.

15. The method according to claim 14, wherein the fifth information is used to feed back credibility of a radio channel parameter of each first path in the third geographic region, and the radio environment map parameter used by the terminal comprises the radio channel parameter of each first path; and/or
the fifth information is used to feed back credibility of a radio channel parameter of each first frequency domain subband of the third geographic region, and the radio environment map parameter used by the terminal comprises the radio channel parameter of each first frequency domain subband.

16. The method according to claim 14 or 15, wherein the fifth information is used to feed back credibility of each first radio transmission parameter of the third geographic region, and the radio transmission parameter used by the terminal comprises each first radio transmission parameter.

17. The method according to any one of claims 1 to 16, wherein the at least one geographic region comprises at least one fourth geographic region, and the method further comprises:
receiving seventh information, wherein the seventh information indicates that a radio environment map parameter of the at least one fourth geographic region is invalid.

18. The method according to claim 6 or 8, wherein the second information comprises an identifier of a first cell managed by a radio access network RAN node, and the at least one geographic region comprises a geographic region in the first cell.

19. The method according to any one of claims 1 to 6 and 18, wherein the at least one geographic region comprises at least one first geographic region, and the method further comprises:
receiving third information, wherein the third information is used to request to update a radio environment map parameter of the at least one first geographic region;
sending fourth information, wherein the fourth information indicates that updating radio environment map parameters of a part or all of first geographic regions in the at least one first geographic region is allowed; and
receiving the updated radio environment map parameters of the part or all of the first geographic regions.

20. The method according to claim 19, wherein the third information comprises at least one of the following: the location information of the terminal, information indicating a second range, an identifier of the at least one first geographic region, the operating frequency band of the radio environment map parameter requested to be updated, the radio channel parameter requested to be updated, and the radio transmission parameter requested to be updated; and the at least one first geographic region is a geographic region in the second range.

21. The method according to any one of claims 1 to 6 and 18 to 20, wherein the at least one geographic region comprises at least one second geographic region, and the method further comprises:
receiving a downlink channel parameter measurement quantity measured in the at least one second geographic region, and/or an uplink radio transmission parameter used in the at least one second geographic region.

22. The method according to claim 21, wherein the method further comprises:
sending first configuration information, wherein the first configuration information is used to configure the terminal to report the downlink channel parameter measurement quantity and/or the used uplink radio transmission parameter.

23. The method according to claim 22, wherein that the first configuration information is used to configure the terminal to report the downlink channel parameter measurement quantity and/or the used uplink radio transmission parameter comprises: the first configuration information is used to configure at least one of the following:
a downlink reference signal resource, the reported downlink channel parameter measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource, wherein
the downlink reference signal resource is used by the terminal to perform downlink channel measurement;
the first time unit indicates reporting of a value of the uplink radio transmission parameter used for uplink transmission in the first time unit;
the reporting manner comprises periodic reporting, aperiodic reporting, or semi-persistent scheduling reporting; and
the second resource is used to carry the downlink channel parameter measurement quantity and/or the used uplink radio transmission parameter.

24. The method according to any one of claims 1 to 6 and 18 to 23, wherein the at least one geographic region comprises at least one third geographic region, and the method further comprises:
receiving fifth information, wherein the fifth information is used to feed back credibility of a radio channel parameter and/or a radio transmission parameter of the at least one third geographic region.

25. The method according to claim 24, wherein the fifth information is used to feed back credibility of a radio channel parameter of each first path in the third geographic region, and the radio environment map parameter used by the terminal comprises the radio channel parameter of each first path; and/or
the fifth information is used to feed back credibility of a radio channel parameter of each first frequency domain subband of the third geographic region, and the radio environment map parameter used by the terminal comprises the radio channel parameter of each first frequency domain subband.

26. The method according to claim 24 or 25, wherein the fifth information is used to feed back credibility of each first radio transmission parameter of the third geographic region, and the radio transmission parameter used by the terminal comprises each first radio transmission parameter.

27. The method according to any one of claims 1 to 6 and 18 to 26, wherein the at least one geographic region comprises at least one fourth geographic region, and the method further comprises:
receiving seventh information, wherein the seventh information indicates that a radio environment map parameter of the at least one fourth geographic region is invalid.

28. A communication apparatus, wherein the communication apparatus comprises a processing module and a transceiver module, wherein
the processing module is configured to obtain first information, wherein the first information comprises information about at least one geographic region and a radio environment map parameter of the at least one geographic region, the radio environment map parameter comprises a radio channel parameter and/or a radio transmission parameter associated with the radio channel parameter, and the first information further comprises at least one of the following: an operating frequency band of the radio environment map parameter, an indication of whether the radio environment map parameter is valid, and a type of the radio environment map parameter, wherein the type of the radio environment map parameter indicates whether the radio environment map parameter is a ground truth; and
the transceiver module is configured to perform communication based on the first information.

29. The communication apparatus according to claim 28, wherein the first information further comprises credibility of the radio environment map parameter.

30. The communication apparatus according to claim 28 or 29, wherein the radio channel parameter comprises at least one of the following: a channel multipath power, a channel multipath delay, a channel multipath azimuth angle of arrival, a channel multipath azimuth angle of departure, a channel multipath zenith angle of arrival, a channel multipath zenith angle of departure, or a frequency domain channel response on at least one frequency domain bandwidth.

31. The communication apparatus according to any one of claims 28 to 30, wherein the radio transmission parameter comprises at least one of the following: a modulation and coding scheme MCS, an uplink transmit power, an uplink timing advance TA, a precoding matrix indicator PMI, a beam indicator, and a reference signal received power.

32. The communication apparatus according to any one of claims 28 to 31, wherein the type of the radio environment map parameter comprises the ground truth or a predicted value.

33. The communication apparatus according to any one of claims 28 to 32, wherein that the processing module is configured to obtain the first information comprises:
the processing module is configured to send second information via the transceiver module, wherein the second information is used to request the radio environment map parameter of the at least one geographic region; and
the processing module is further configured to receive the first information via the transceiver module.

34. The communication apparatus according to claim 33, wherein the second information comprises at least one of the following: location information of a terminal, information indicating a first range, and an identifier of the at least one geographic region, wherein the at least one geographic region is a geographic region in the first range.

35. The communication apparatus according to claim 33 or 34, wherein the second information comprises at least one of the following: the operating frequency band of the requested radio environment map parameter, the requested radio channel parameter, and the requested radio transmission parameter.

36. The communication apparatus according to any one of claims 28 to 35, wherein the at least one geographic region comprises at least one first geographic region;
the transceiver module is further configured to send third information, wherein the third information is used to request to update a radio environment map parameter of the at least one first geographic region;
the transceiver module is further configured to receive fourth information, wherein the fourth information indicates that updating radio environment map parameters of a part or all of first geographic regions in the at least one first geographic region is allowed; and
the transceiver module is further configured to send the updated radio environment map parameters of the part or all of the first geographic regions.

37. The communication apparatus according to claim 36, wherein the third information comprises at least one of the following: the location information of the terminal, information indicating a second range, an identifier of the at least one first geographic region, the operating frequency band of the radio environment map parameter requested to be updated, the radio channel parameter requested to be updated, and the radio transmission parameter requested to be updated; and the at least one first geographic region is a geographic region in the second range.

38. The communication apparatus according to any one of claims 28 to 37, wherein the at least one geographic region comprises at least one second geographic region; and
the transceiver module is further configured to send a downlink channel parameter measurement quantity measured in the at least one second geographic region, and/or an uplink radio transmission parameter used in the at least one second geographic region.

39. The communication apparatus according to claim 38, wherein that the transceiver module is further configured to send the downlink channel parameter measurement quantity measured in the at least one second geographic region, and/or the uplink radio transmission parameter used in the at least one second geographic region comprises:
the transceiver module is further configured to receive first configuration information, wherein the first configuration information is used to configure the terminal to report the downlink channel parameter measurement quantity and/or the used uplink radio transmission parameter; and
the transceiver module is further configured to send, based on the first configuration information, the downlink channel parameter measurement quantity measured in the at least one second geographic region and/or the uplink radio transmission parameter used in the at least one second geographic region.

40. The communication apparatus according to claim 39, wherein that the first configuration information is used to configure the terminal to report the downlink channel parameter measurement quantity and/or the used uplink radio transmission parameter comprises: the first configuration information is used to configure at least one of the following:
a downlink reference signal resource, the reported downlink channel measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource, wherein
the downlink reference signal resource is used by the terminal to perform downlink channel measurement;
the first time unit indicates reporting of a value of the uplink radio transmission parameter used for uplink transmission in the first time unit;
the reporting manner comprises periodic reporting, aperiodic reporting, or semi-persistent scheduling reporting; and
the second resource is used to carry the downlink channel parameter measurement quantity and/or the used uplink radio transmission parameter.

41. The communication apparatus according to any one of claims 28 to 40, wherein the at least one geographic region comprises at least one third geographic region; and
the transceiver module is further configured to send fifth information, wherein the fifth information is used to feed back credibility of a radio channel parameter and/or a radio transmission parameter of the at least one third geographic region.

42. The communication apparatus according to claim 41, wherein the fifth information is used to feed back credibility of a radio channel parameter of each first path in the third geographic region, and a radio environment map parameter used by the terminal comprises the radio channel parameter of each first path; and/or
the fifth information is used to feed back credibility of a radio channel parameter of each first frequency domain subband of the third geographic region, and the radio environment map parameter used by the terminal comprises the radio channel parameter of each first frequency domain subband.

43. The communication apparatus according to claim 41 or 42, wherein the fifth information is used to feed back credibility of each first radio transmission parameter of the third geographic region, and the radio transmission parameter used by the terminal comprises each first radio transmission parameter.

44. The communication apparatus according to any one of claims 28 to 43, wherein the at least one geographic region comprises at least one fourth geographic region; and
the transceiver module is further configured to receive seventh information, wherein the seventh information indicates that a radio environment map parameter of the at least one fourth geographic region is invalid.

45. The communication apparatus according to claim 33 or 35, wherein the second information comprises an identifier of a first cell managed by a radio access network RAN node, and the at least one geographic region comprises a geographic region in the first cell.

46. The communication apparatus according to any one of claims 28 to 33 and 45, wherein the at least one geographic region comprises at least one first geographic region;
the transceiver module is further configured to receive third information, wherein the third information is used to request to update a radio environment map parameter of the at least one first geographic region;
the transceiver module is further configured to send fourth information, wherein the fourth information indicates that updating radio environment map parameters of a part or all of first geographic regions in the at least one first geographic region is allowed; and
the transceiver module is further configured to receive the updated radio environment map parameters of the part or all of the first geographic regions.

47. The communication apparatus according to claim 46, wherein the third information comprises at least one of the following: the location information of the terminal, information indicating a second range, an identifier of the at least one first geographic region, the operating frequency band of the radio environment map parameter requested to be updated, the radio channel parameter requested to be updated, and the radio transmission parameter requested to be updated; and the at least one first geographic region is a geographic region in the second range.

48. The communication apparatus according to any one of claims 28 to 33 and 45 to 47, wherein the at least one geographic region comprises at least one second geographic region; and
the transceiver module is further configured to receive a downlink channel parameter measurement quantity measured in the at least one second geographic region, and/or an uplink radio transmission parameter used in the at least one second geographic region.

49. The communication apparatus according to claim 48, wherein
the transceiver module is further configured to send first configuration information, wherein the first configuration information is used to configure the terminal to report the downlink channel parameter measurement quantity and/or the used uplink radio transmission parameter.

50. The communication apparatus according to claim 49, wherein that the first configuration information is used to configure the terminal to report the downlink channel parameter measurement quantity and/or the used uplink radio transmission parameter comprises: the first configuration information is used to configure at least one of the following:
a downlink reference signal resource, the reported downlink channel parameter measurement quantity, a first time unit, the reported uplink radio transmission parameter, an operating frequency band of a reported downlink channel parameter and/or the reported uplink radio transmission parameter, a frequency domain granularity of the reported downlink channel parameter and/or the reported uplink radio transmission parameter, a reporting manner, whether to support compressed reporting, a compression manner, and a second resource, wherein
the downlink reference signal resource is used by the terminal to perform downlink channel measurement;
the first time unit indicates reporting of a value of the uplink radio transmission parameter used for uplink transmission in the first time unit;
the reporting manner comprises periodic reporting, aperiodic reporting, or semi-persistent scheduling reporting; and
the second resource is used to carry the downlink channel parameter measurement quantity and/or the used uplink radio transmission parameter.

51. The communication apparatus according to any one of claims 28 to 33 and 45 to 50, wherein the at least one geographic region comprises at least one third geographic region; and
the transceiver module is further configured to receive fifth information, wherein the fifth information is used to feed back credibility of a radio channel parameter and/or a radio transmission parameter of the at least one third geographic region.

52. The communication apparatus according to claim 51, wherein the fifth information is used to feed back credibility of a radio channel parameter of each first path in the third geographic region, and the radio environment map parameter used by the terminal comprises the radio channel parameter of each first path; and/or
the fifth information is used to feed back credibility of a radio channel parameter of each first frequency domain subband of the third geographic region, and the radio environment map parameter used by the terminal comprises the radio channel parameter of each first frequency domain subband.

53. The communication apparatus according to claim 51 or 52, wherein the fifth information is used to feed back credibility of each first radio transmission parameter of the third geographic region, and the radio transmission parameter used by the terminal comprises each first radio transmission parameter.

54. The communication apparatus according to any one of claims 28 to 33 and 45 to 53, wherein the at least one geographic region comprises at least one fourth geographic region; and
the transceiver module is further configured to receive seventh information, wherein the seventh information indicates that a radio environment map parameter of the at least one fourth geographic region is invalid.

55. A communication apparatus, wherein the communication apparatus comprises a processor, and the processor is configured to run a computer program or instructions, to enable the communication apparatus to perform the method according to any one of claims 1 to 27.

56. A computer-readable storage medium, wherein the computer-readable storage medium stores computer instructions or a program, and when the computer instructions or the program is run on a computer, the method according to any one of claims 1 to 27 is performed.

57. A computer program product, wherein the computer program product comprises computer instructions, and when a part or all of the computer instructions are run on a computer, the method according to any one of claims 1 to 27 is performed.
